# FASCICULE DE BREVET EUROPEEN

(11) **EP 1 636 077 B1**
(45) Date de publication et mention de la délivrance du brevet: **27.12.2006**
(21) Numéro de dépôt: 04767409.8
(22) Date de dépôt: 22.06.2004
(51) Int. Cl.: B60T 13/57, B60T 13/573, B60T 13/565

(54) **SERVOMOTEUR A COURSE MORTE REDUITE ET A UN SYSTEME DE FREINAGE COMPORTANT UN TEL SERVOMOTEUR**
SERVOMOTOR MIT VERRINGERTEM TOTGANG UND SOLCH EINEN SERVOMOTOR UMFASSENDES BREMSSYSTEM
SERVO MOTOR WITH REDUCED SLACK AND BRAKE SYSTEM COMPRISING SUCH A SERVO MOTOR

(30) Priorité: 23.06.2003 FR 0307572
(43) Date de publication de la demande: 22.03.2006
(73) Titulaire: ROBERT BOSCH GMBH, 70442 Stuttgart (DE)
(72) Inventeur: ATTARD, Jean-Marc, F-60500 CHANTILLY (FR); ANDERSON, Chris, F-75002 PARIS (FR); SPROCQ, Raynald, F-77360 VAIRES SUR MARNE (FR)
(74) Mandataire: Hurwic, Aleksander Wiktor
(86) Numéro de dépôt international: PCT/FR2004/001553
(87) Numéro de publication internationale: WO 2005/000655

(56) Documents cités:
- EP-A- 1 227 020
- US-A- 3 973 593
- US-A- 5 167 180
- US-A- 5 579 675
- US-B1- 6 467 390

## Description

La présente invention se rapporte principalement à un servomoteur d'assistance pneumatique au freinage d'actionnement rapide et à un système de freinage comportant un tel servomoteur.

Il est connu de l'état de la technique un dispositif de freinage d'actionnement rapide ou dit également à course morte réduite comportant un maître-cylindre actionné par une tige de commande actionnée par un conducteur, l'action du conducteur étant amplifiée par un servomoteur d'assistance pneumatique permettant de réduire la course de la pédale nécessaire à obtention d'une action de freinage.

Le servomoteur de type connu décrit par exemple dans le document FR 2 696 143 comporte une enveloppe dans laquelle est montée à coulissement étanche une jupe divisant l'espace intérieur de l'enveloppe en une chambre à basse pression et une chambre à pression variable.
La jupe comporte un passage central dans lequel est montée un piston pneumatique muni d'une valve à trois voies commandée par la tige de commande mettant en communication la chambre à basse pression et la chambre de travail au repos, et isolant la chambre à basse pression de la chambre de travail et mettant la chambre de travail en communication avec une source de fluide à haute pression.

La jupe est montée mobile axialement par rapport au piston pneumatique sur une course déterminée en début de freinage. Par conséquent, lorsque le conducteur appuie sur la pédale de frein, la chambre de travail est isolée de la chambre à basse pression et se remplit de fluide pneumatique à haute pression. Du fait du différentiel de pressions entre la chambre à basse pression et la chambre de travail, la jupe se déplace dans la chambre à basse pression, sans emporter le piston pneumatique sur la course déterminée. Par conséquent le conducteur n'a pas à enfoncer d'avantage la pédale pour maintenir l'alimentation de la chambre de travail en fluide pneumatique à haute pression.
Le déplacement de la jupe est transmis à un piston primaire d'un maître-cylindre, provoquant la fermeture des clapets du maître-cylindre et une montée en pression au niveau des freins.

Au delà de la course déterminée, la jupe vient en appui sur une partie radialement externe du piston pneumatique, leurs mouvements sont alors liés. A partir de cet instant, le conducteur doit enfoncer d'avantage la tige de commande pour obtenir une augmentation de l'intensité de freinage. Suivant le choix de la course morte, le conducteur « ne verra pas à la pédale de frein » la course nécessaire à la fermeture des clapets du maître-cylindre, cette course ne produisant pas de montée en pression dans les freins, appelée aussi course morte, ; ou le conducteur ressentira directement une forte décélération donnant la sensation d'un freinage appuyé.

Ce dispositif appelé dispositif de course morte masquée puisqu'elle masque les courses mortes au conducteur, donne entière satisfaction, mais fait toujours l'objet de recherche pour le simplifier afin d'en réduire la complexité, d'en améliorer la facilité de montage et également d'en réduire le coût de revient. En effet le dispositif est d'une structure très complexe puisqu'il nécessite de contourner le piston pneumatique et une réalisation par emboutissage en plusieurs passent.
Le document US 5579675 montre un servomoteur d'après le preambule de la revendication 1.

C'est par conséquent un but de la présente invention d'offrir un dispositif de freinage à faible course d'actionnement de structure simple et facilement adaptable au dispositif connu.

C'est également un but de la présente invention d'offrir un dispositif de freinage à faible course d'actionnement, de montage simple et de coût de revient modéré.

Les buts précédemment énoncés sont atteints par un servomoteur d'assistance pneumatique au freinage comportant un ensemble jupe et piston pneumatique liés l'un à l'autre rigidement, une valve trois voies comportant un premier siège de clapet et un deuxième siège de clapet, le premier siège étant non solidaire du piston pneumatique sur une première course axiale déterminée et un deuxième siège de clapet porté par un distributeur plongeur. Au delà de ladite course déterminée, le premier siège de clapet devient solidaire du piston pneumatique.

En d'autre termes, lors d'une première phase de freinage, le déplacement axiale du premier siège de clapet est indépendant du déplacement axial du piston pneumatique.

La présente invention a principalement pour objet un servomoteur d'assistance pneumatique au freinage comportant une enveloppe d'axe longitudinale formée par une première et une deuxième coquilles, raccordées par leurs extrémités radialement externes, dans laquelle est monté à coulissement étanche un ensemble jupe et piston pneumatique d'axe longitudinal, ledit ensemble, divisant l'espace intérieur de l'enveloppe en une chambre à basse pression et en une chambre à pression variable, un ressort de rappel de l'ensemble jupe et piston pneumatique, en position repos étant monté dans la chambre à basse pression entre la première coquille et une face du piston pneumatique, une valve trois voies actionnée par une tige de commande étant montée dans un passage longitudinal percé dans le piston pneumatique, ladite tige de commande étant reliée par une première extrémité longitudinale à une pédale de frein et une deuxième extrémité de ladite tige de commande étant reçue dans une cavité de réception pratiquée dans une première extrémité longitudinale d'un distributeur-plongeur, ladite tige de commande étant rappelé dans une positon de repos par un ressort de rappel, ledit distributeur plongeur comportant à une deuxième extrémité longitudinale un palpeur d'application de l'effort de la tige de commande à un piston hydraulique d'un maître-cylindre par l'intermédiaire d'un dispositif de réaction, ledit ensemble jupe et piston, transmettant un effort d'assistance pneumatique au piston hydraulique du maître-cylindre par une face centrale du piston pneumatique, ladite valve trois voies comportant un premier et un deuxième sièges de clapet, et un clapet amené en application d'au moins un des premier et deuxième sièges de clapet, par un ressort de valve, ledit deuxième siège de clapet étant porté par une première extrémité longitudinale du distributeur-plongeur caractérisé en ce que le premier siège de clapet est porté par une première extrémité longitudinale d'une douille montée à coulissement étanche dans le piston pneumatique sur une première course déterminée, et en ce qu'il comporte un moyen de solidarisation apte à lier axialement ladite douille au piston pneumatique lorsque ledit piston pneumatique a parcouru la course déterminée.

La présente invention a également pour objet un servomoteur caractérisé en ce qu'il comporte un moyen élastique maintenant la douille immobile par rapport à l'enveloppe du servomoteur tant que ladite course déterminée n'est pas rattrapée, ledit moyen élastique étant monté en compression axialement entre une portée annulaire, pratiquée dans une paroi d'un passage axial du piston pneumatique et un épaulement de la douille.

La présente invention a également pour objet un servomoteur caractérisé en ce qu'il comporte une deuxième clé perpendiculaire à l'axe montée fixe dans deux troisièmes lumières du piston pneumatique diamétralement opposées et disposé axialement entre les premières lumières et la pédale de frein et traversant deux quatrièmes lumières diamétralement opposées pratiquées dans la douille afin de former une butée axial en direction de la pédale de frein pour le distributeur plongeur par coopération d'une collerette annulaire solidaire du distributeur-plongeur et d'une première et deuxième branches de la deuxième clé et de définir le position repos du piston pneumatique par coopération des extrémités transversales de ladite deuxième clé avec l'enveloppe du servomoteur.

La présente invention a également pour objet un servomoteur caractérisé en ce que la portée annulaire du piston pneumatique est formé par un rétrécissement axial portée par une face du piston pneumatique transmettant l'effort d'assistance au piston hydraulique du maître-cylindre. et en ce que l'épaulement de la douille est situé axialement entre la première clé et le palpeur du distributeur-plongeur.

La présente invention a également pour objet un servomoteur caractérisé en ce que ledit moyen de solidarisation est une première clé solidaire en déplacement de ladite douille traversant perpendiculairement à l'axe deux premières lumières diamétralement opposées pratiquées dans la queue dudit piston pneumatique et deux deuxièmes lumières diamétralement opposés pratiquées dans la douille et en ce ladite course déterminée est égale à la distance séparant une extrémité arrière des premières lumières d'une première face arrière de la première clé, et ce que ladite première clé est en forme de fourche à deux branches.

La présente invention a également pour objet un servomoteur caractérisé en ce que le ressort de rappel de la tige de commande est monté en appui entre un fond d'une gorge axial du piston pneumatique et une première face d'un épanouissement tronconique du distributeur-plongeur, ledit épanouissement portant sur une deuxième face opposée à la première face portant le deuxième siège de clapet.

La présente invention a également pour objet un servomoteur caractérisé en ce qu'il comporte un dispositif d'assistance au freinage d'urgence formé par des moyens aptes à déplacer axialement en direction de frein le premier siège de clapet lorsque le distributeur plongeur est déplacé à une vitesse supérieure à une vitesse déterminé.

La présente invention a également pour objet un servomoteur caractérisé en ce que les premier et deuxième bras de la première clé sont élastiques radialement, aptes à être écartés radialement l'un de l'autre, et coopérant avec un décrochement axial porté par les deux deuxième lumières, ledit décrochement définissant une première et une deuxième position axiale de la douille, et en ce que le distributeur plongeur comporte un moyen pour éloigner radialement les bras de la première clé.

La présente invention a également pour objet un servomoteur caractérisé en ce que le moyen pour éloigner les bras l'un de l'autre est une surface sensiblement tronconique s'élargissant en direction de la pédale de frein, lié rigidement au ditributeur-plongeur et disposé axialement entre la première et le deuxième clé.

La présente invention a également pour objet un servomoteur caractérisé en ce que ledit piston pneumatique comporte une gorge axiale annulaire recevant ladite douille et définissant un tronçon tubulaire central recevant le distributeur plongeur et en ce que la porté annulaire est pratiquée dans une paroi de la gorge axiale.

La présente invention a également pour objet un servomoteur caractérisé en ce que le tronçon tubulaire central comporte deux cinquièmes lumières diamétralement opposées pour le passage de la deuxième clé.

La présente invention a également pour objet un servomoteur caractérisé en ce qu'il comporte ledit moyen de solidarisation est une première clé solidaire en déplacement dudit piston pneumatique traversant perpendiculairement à l'axe deux premières lumières diamétralement opposées pratiquées dans la queue dudit piston pneumatique et deux deuxièmes lumières diamétralement opposés pratiquées dans la douille, en ce qu'une distance égale à la course déterminée sépare une deuxième extrémité longitudinale de la douille et une première face de ladite première clé et en ce que ladite clé est en forme de fourche à deux branches chevauchant le tronçon tubulaire central du piston pneumatique.

La présente invention a également pour objet un servomoteur caractérisé en ce que le moyen élastique est un ressort cylindrique.

La présente invention a également pour objet un servomoteur caractérisé en ce que l'étanchéité du coulissement entre la douille et le piston pneumatique est réalisé par un joint torique monté dans un gorge pratiquée dans la paroi extérieure de la douille.

La présente invention a également pour objet un servomoteur caractérisé en ce qu'il comporte des moyens pour réduire la vitesse initiale de déplacement du piston pneumatique relativement à l'enveloppe du servomoteur.

La présente invention a également pour objet un servomoteur caractérisé en ce que lesdits moyens pour réduire la vitesse initiale du piston comportent un passage de communication entre la chambre à basse pression et la chambre à haute pression, lorsque le clapet est écarté du deuxième siège de clapet et tant que le piston pneumatique n'a pas parcouru un deuxième course déterminée.

La présente invention a également pour objet un servomoteur caractérisé en ce que ledit passage est formé par un canal ménagé entre une paroi extérieur d'un manchon portant à un extrémité axial le clapet et le passage du piston, au moins un perçage radial pratiqué dans une première extension cylindrique axiale d'une cage entourant la tige de commande et au moins un perçage axial du manchon mettant en communication la chambre à pression variable avec une chambre annulaire délimitée par le manchon, le première extension cylindrique et une deuxième extension cylindrique interne concentrique à la première extension et raccordé de manière étanche la première extension par une extrémité axiale orientée vers la pédale de frein et en ce que le manchon comporte à une extrémité opposée au clapet un lèvre apte à venir obturée le perçage radial lorsque le piston s'est déplacé de la course déterminée.

La présente invention a également pour objet un servomoteur caractérisée en ce que la deuxième course déterminée est au plus égale à la première course déterminée.

La présente invention a également pour objet un servomoteur caractérisé en ce que le dispositif de réaction comporte un piston auxiliaire monté à coulissement étanche dans un perçage axial traversant du piston hydraulique du maître-cylindre et soumis par une première extrémité à la pression hydraulique régnant dans le maître-cylindre et en susceptible de venir en contact du palpeur du distributeur plongeur par une deuxième extrémité longitudinale opposée et en ce qu'il comporte également un ressort de saut en appui fixe par une première extrémité longitudinale sur le piston hydraulique et par une deuxième extrémité en appui flottant par rapport au piston hydraulique.

La présente invention a également pour objet un servomoteur caractérisé en ce que l'appui fixe est une bague montée serrée dans le perçage axial du piston hydraulique et en ce que l'appui flottant est une bague montée à coulissement dans le perçage axial et en appui lorsque la pression dans le maître-cylindre est inférieure à la pression déterminée contre une portée annulaire du perçage raccordant une première et une deuxième portions,

La présente invention a également pour objet un servomoteur caractérisé en ce que le piston auxiliaire est en appui par la deuxième extrémité longitudinale contre le palpeur et en ce qu'un jeu est prévu entre l'appui flottant et un épaulement du piston auxiliaire.

La présente invention a également pour objet un servomoteur caractérisé en ce que le piston auxiliaire est en appui contre l'appui flottant par un épaulement et en ce qu'un jeu est prévu entre la deuxième extrémité longitudinale et le palpeur.

La présente invention a également pour objet un servomoteur caractérisé en ce que le dispositif de réaction comporte un ressort de rappel monté en appui entre la première extrémité du piston auxiliaire et une extrémité du perçage axial, maintenant le piston auxiliaire en contact de l'appui flottant et en ce qu'un jeu est prévu entre la deuxième extrémité longitudinale du piston auxiliaire et le palpeur.

La présente invention a également pour objet un servomoteur caractérisé en ce que le dispositif de réaction comporte un ressort de rappel monté en appui entre la première extrémité du positon auxiliaire et une extrémité du perçage axial, ledit ressort maintenant le piston auxiliaire en appui par la deuxième extrémité longitudinale contre le palpeur et en ce qu'un jeu est prévu entre l'appui flottant et un épaulement du piston auxiliaire.

La présente invention a également pour objet un servomoteur caractérisé en ce que l'étanchéité du coulissement entre le piston auxiliaire et le perçage axial d du piston hydraulique est réalisé au moyen d'un joint torique monté dans une gorge pratiquée dans la périphérie du piston auxiliaire.

La présente invention a également pour objet un servomoteur caractérisé en ce que le piston auxiliaire comporte à sa deuxième extrémité un élément amortisseur, avantageusement en élastomère destiné à réduire le bruit de contact entre le palpeur et le piston auxiliaire.

La présente invention a également pour objet un dispositif de freinage comportant un maître-cylindre raccordé de manière hydraulique à des freins disposés au niveau de roues d'un véhicule automobile et un servomoteur interposé entre le maître-cylindre et une tige de commande déplacé au moyen d'une pédale de frein, ledit servomoteur transmettant un effort appliqué à la pédale et appliquant un effort d'assistance pneumatique à un piston hydraulique du maître-cylindre caractérisé en ce que ledit servomoteur est un servomoteur selon la présente invention et en ce que ledit piston hydraulique est en appui par une première extrémité longitudinale contre une extrémité du piston pneumatique débouchant dans la chambre à basse pression du servomoteur.

La présente invention sera mieux comprise à l'aide de la description qui va suivre et des figures fournies en annexe sur lesquelles l'avant et l'arrière correspondent respectivement à la gauche et à la droite des dessins et pour lesquelles :
- La figure 1 est une vue en coupe longitudinale d'un premier mode réalisation d'un servomoteur selon la présente invention au repos ;
- La figure 2 est une vue de détail agrandie de la figure 1 ;
- La figure 3 est une vue partielle du servomoteur de la figure 1 en coupe longitudinale dans une première phase d' actionnement ;
- La figure 4 est une vue partielle du servomoteur de la figure 1 en coupe longitudinale dans une deuxième phase d'actionnement ;
- La figure 5 est une vue partielle du servomoteur de la figure 1 en coupe longitudinale dans une troisième phase d'actionnement ;
- La figure 6 est une vue partielle du servomoteur de la figure 1 en coupe longitudinale dans en fin de phase de freinage ;
- La figure 7 est une vue d'un détail en coupe longitudinale d'un premier exemple d'un deuxième mode de réalisation d'un servomoteur selon la présente invention au repos;
- La figure 7a est une vue de détail de la figure 7 ;
- La figure 8 est une vue partielle du servomoteur de la figure 7 en coupe longitudinale dans une première phase d'actionnement ;
- La figure 9 est une vue partielle du servomoteur de la figure 7 en coupe longitudinale dans une deuxième phase d'actionnement;
- La figure 9a est une vue de détail de la figure 9 ;

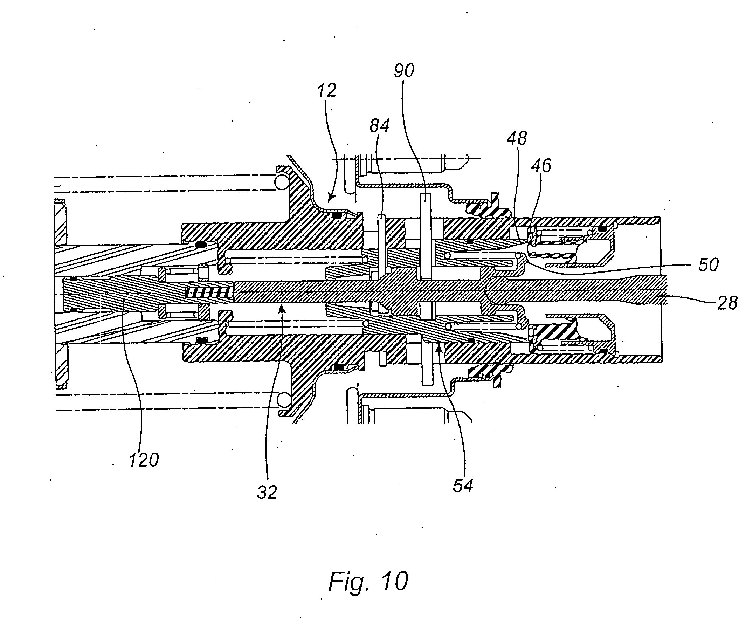

- La figure 10 est une vue partielle du servomoteur de la figure 7 en coupe longitudinale dans une troisième phase d'actionnement;
- La figure 11 est une vue en coupe longitudinale d'un servomoteur selon la deuxième mode de réalisation comportant un dispositif d'assistance au freinage d'urgence au repos ;
- La figure 12 est une vue partielle en coupe longitudinale du servomoteur de la figure 11 à l'équilibre lorsque le dispositif d'assistance au freinage d'urgence a été déclenché ;
- Les figures 13a et 13b, sont des vues de trois quart d'éléments isolés du servomoteur de la figure 9 ;
- Les figures 14a et 14b sont des vues partiels en coupe longitudinale de variantes de réalisation de la présente invention.

Les mêmes références seront utilisées pour décrire les éléments ayant les mêmes fonctions.

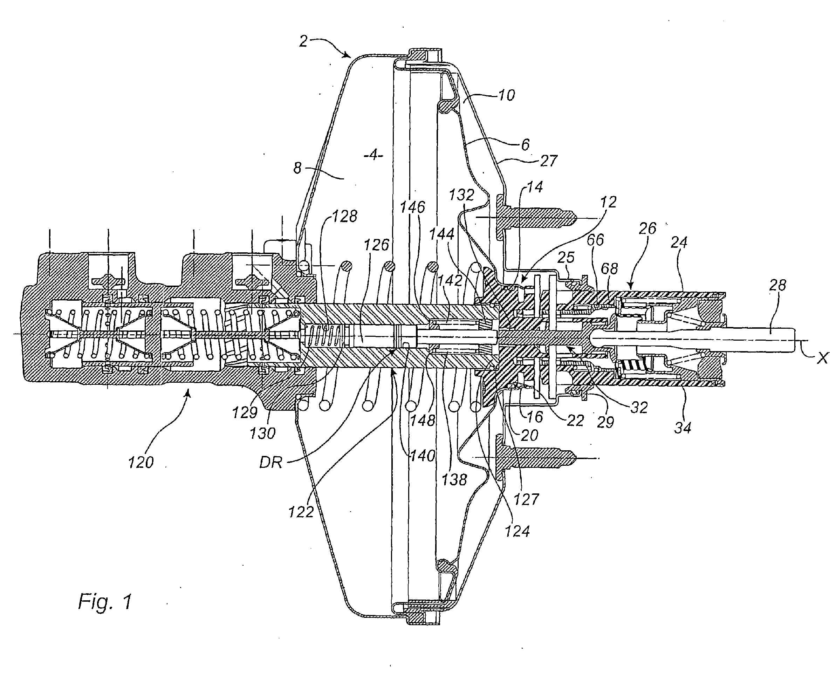

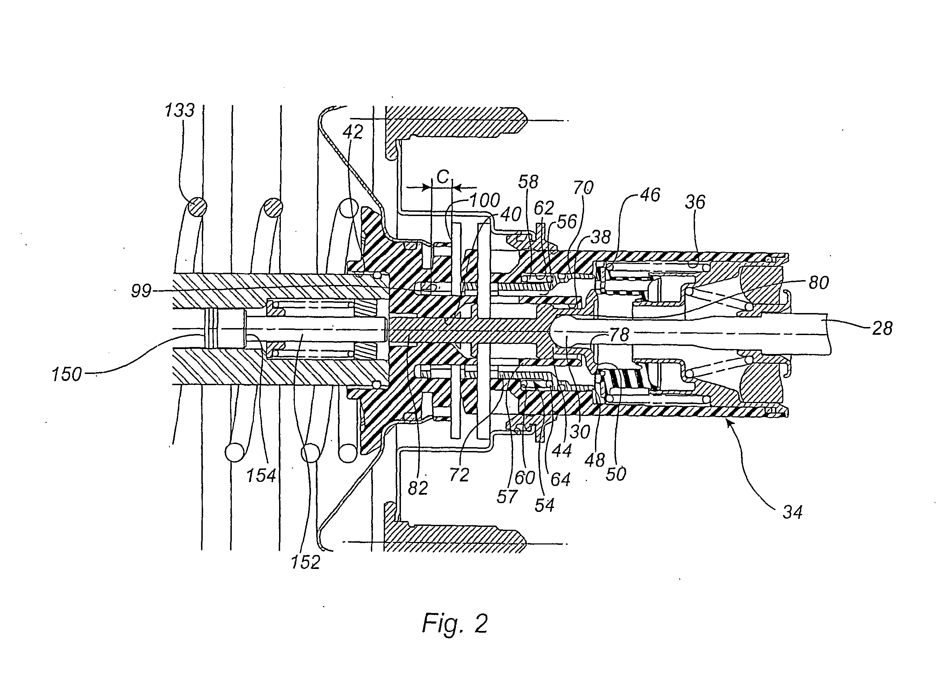

Sur les figures 1 et 2, on peut voir un servomoteur selon la présente invention en position repos comportant une enveloppe 2 d'axe longitudinal X délimitant un espace intérieur 4, une jupe 6 montée à coulissement axial étanche dans l'espace 4 et divisant l'espace 4 en une première chambre 8 à basse pression ou chambre avant et une deuxième chambre 10 à pression variable ou chambre arrière, un piston 12 monté solidaire de manière étanche dans la jupe 6 dans un orifice central 14 de la jupe 6. Mais il est bien entendu que l'on peut prévoir un ensemble jupe et piston pneumatique réalisée en une seule pièce.

La chambre avant est alimentée en fluide pneumatique à basse pression. La chambre arrière est susceptible d'être mise en communication avec la chambre à basse pression ou avec une source de fluide pneumatique à haute pression, par exemple de l'air à pression atmosphérique au moyen d'une valve trois voies 26.

L'orifice central 14 de la jupe 6 est bordé par une collerette 16 sensiblement tronconique orientée vers l'arrière dans lequel est reçue une première extrémité avant 18 du piston pneumatique 12 de forme complémentaire. Un moyen d'étanchéité 20 est disposé entre une surface intérieure de la collerette tronconique et un surface extérieure de la première extrémité avant 18 du piston 18, par exemple il s'agit d'un joint torique monté dans une gorge 22 pratiquée dans la surface extérieure du piston 12.

Le piston pneumatique s'étend vers l'arrière par une queue de piston 24 de forme sensiblement cylindrique, monté à coulissement étanche dans une cheminée 25 venue de matière avec une coquille arrière 27 de l'enveloppe au moyen d'un joint raclant 29. Le piston pneumatique 12 est traversé de part en part axialement par un passage 34 dans lequel est montée dans une première partie arrière la valve trois voies 26 actionnée par une tige de commande 28.
La tige de commande est liée par une première extrémité à une pédale de frein (non représentées) et par une deuxième extrémité 30 à un distributeur plongeur 32.

Le passage 34 comporte avantageusement orientées de l'arrière vers l'avant une première partie arrière de plus grand diamètre 36, une deuxième partie 38 de diamètre inférieur au diamètre de la première partie 36, une troisième partie 40 de diamètre inférieur au diamètre de la deuxième partie 38, et une quatrième partie 42 de diamètre supérieure au diamètre de la troisième partie 40.

La deuxième extrémité 30 de la tige de commande 28 est montée de manière rotulante dans une première extrémité 44 arrière du distributeur plongeur.

La valve trois voies 26 comporte un clapet 46 susceptible de coopérer avec un premier siège de clapet d'équilibrage 48 et un deuxième siège de clapet d'admission 50. Le premier siège de clapet 48 est porté par une extrémité longitudinale arrière d'une douille 54 montée à coulissement étanche dans une gorge annulaire axiale 56 pratiquée dans le piston pneumatique 12 et entourant la deuxième partie 38 du passage 34. La gorge 56 axiale délimite dans le piston, un tronçon tubulaire central 57.

Un moyen élastique 58, par exemple un ressort cylindrique est monté en réaction entre une portée annulaire 60 pratiquée dans une paroi 62 de la gorge axiale 56 et un épaulement 64 sur la paroi extérieure de la douille 54, l'épaulement 64 raccordant une première partie arrière de plus grand diamètre 70 de la douille à une deuxième partie de plus petit diamètre 72 de la douille. Le moyen élastique 58 permet de maintenir immobile la douille 54 par rapport à l'enveloppe du servomoteur tant que la piston pneumatique n'a pas parcouru une course déterminée C.

Dans l'exemple représenté, l'étanchéité du coulissement entre la douille 54 et la paroi 62 extérieure de la gorge 56 est obtenu par un joint torique 66 monté dans une gorge 68 pratiquée dans la paroi extérieure de la douille 54. Il est bien entendu que l'on pourrait prévoir par exemple une gorge dans la paroi extérieure 62 de la gorge axiale 56 pour recevoir le moyen d'étanchéité.

Le deuxième siège de clapet 50 est porté par un épanouissement tronconique 78 de la première extrémité arrière 44 du distributeur-plongeur entourant la deuxième extrémité avant de la tige de commande 28.

Le distributeur-plongeur comporte avantageusement un premier tronçon cylindrique de plus grand diamètre 80 , sensiblement égal au diamètre intérieur de la deuxième partie 38 du passage 34, et un deuxième tronçon cylindrique de plus petit diamètre 82 sensiblement égal au diamètre de la troisième partie 40 du passage 34. Ainsi le guidage axial du distributeur plongeur est assuré par le deuxième 38 et troisième 40 partie du passage 34.

Le servomoteur selon la présente invention comporte également un premier élément 84 apte à lié axialement le piston et la douille 54 au delà de la course C déterminée. Ledit élément 84 est formé par une première clé traversant perpendiculairement à l'axe X deux premières lumières diamétralement opposées 86 du piston et deux deuxièmes lumières diamétralement opposées 88 pratiquées dans la partie de plus petit diamètre 72 de la douille 54.

La clé 84 est montée fixe dans le piston pneumatique 12.

La clé 84 a sensiblement la forme d'un fourche à deux branches parallèles chevauchant le tronçon central tubulaire 57.

La course C est déterminée par la distance séparant une première face avant 100 de la clé et les premières extrémités 99 longitudinales avant des deuxièmes lumières 88.

Le servomoteur comporte également une deuxième clé 90 formant butée axial de retour pour le distributeur et monté parallèlement à la première clé 84 axialement en arrière de celle-ci. La deuxième clé 90 traverse deux troisièmes lumières 92 diamétralement opposées pratiquées dans le piston en arrière axialement des premières lumières 86, deux quatrièmes lumières 94 diamétralement opposées pratiquées dans la douille axialement en arrière des deuxièmes lumières 88, et des cinquièmes lumières 96 diamétralement opposées pratiquées dans le tronçon tubulaire central 57. La clé 90 a sensiblement la forme d'une fourche comportant deux bras parallèles chevauchant le deuxième tronçon cylindrique 82 de plus petit diamètre. Les bras de la deuxième clé 90 sont susceptible de coopérer avec une collerette annulaire 98 en saillie radialement du deuxième tronçon cylindrique de plus petit diamètre 82, retenant axialement le distributeur plongeur en direction de la pédale de frein.
De plus la clé 90 comporte des extrémités 117 selon un axe perpendiculaire à l'axe X en saillie radialement de la queue de piston et apte à venir en appui contre une portée annulaire 119 de la cheminée 25 de l'enveloppe 2 du servomoteur, définissant ainsi la position repos du piston pneumatique 12.

La collerette 98 a un diamètre extérieur sensiblement égal au diamètre intérieur de la deuxième partie 38 du passage 34 améliorant le guidage axial du distributeur plongeur dans le passage 34.

Le clapet 46 de la valve trois voies est formé par une surface annulaire contenue dans un plan orthogonal à l'axe X porté par une extrémité longitudinale avant d'un manchon 102 en matériau souple monté immobile dans la queue de piston par l'intermédiaire d'une cage 104 montée par exemple à force dans la queue de piston. La cage et le manchon entourent la tige de commande. Un ressort de valve 106 est monté en réaction entre un épaulement extérieur 108 de la cage 104 et une face arrière 110 du clapet, confirmant l'application du clapet sur l'un ou l'autre ou les deux sièges de clapet.

Un ressort de rappel 112 de la tige de commande est monté en compression entre une portée annulaire 114 de la cage 104 et une surface (non représentée) en saillie de la tige de commande.

Le distributeur-plongeur comporte à un deuxième extrémité longitudinale avant un palpeur 116 susceptible de venir en contact avec un dispositif de réaction DR monté dans une queue d'un piston 118 d'un maître-cylindre 120.

Le maître-cylindre 120 est en appui par une extrémité longitudinale arrière contre un coquille avant de l'enveloppe et comporte au moins un piston hydraulique 122 en appui par un extrémité longitudinale arrière 124 contre une face avant du piston pneumatique, dans l'exemple représentée l'extrémité 124 du piston hydraulique 122 est en appui plan contre une portée annulaire 127 raccordant la troisième partie 38 et la quatrième partie 40 du passage 34 du piston pneumatique 12.

Le montage de l'extrémité arrière 124 du piston hydraulique dans la quatrième partie est réalisé de manière étanche au moyen d'un moyen d'étanchéité monté dans une gorge du piston hydraulique. On pourrait bien entendu prévoir une gorge dans le piston pneumatique.

Sur la figure 1, on peut voir le dispositif de réaction DR selon une première variante de réalisation, comportant un piston auxiliaire 126 monté à coulissement étanche dans un perçage axial 128 traversant dans le piston hydraulique 122 et en communication avec la chambre primaire du maître-cylindre. Le piston auxiliaire 126 est muni à une première extrémité longitudinale avant d'une première surface 130 soumise à la pression hydraulique régnant dans le maître-cylindre et à une deuxième extrémité longitudinale arrière d'une deuxième surface 132 en regard du palpeur.

Un ressort de rappel 129 du piston auxiliaire 126 est monté dans le perçage 128 entre la première surface 130 et une extrémité avant du perçage 128.

Le dispositif de réaction DR comporte également un ressort de saut 138 bien connu de l'homme du métier, monté dans une première, portion arrière 140 de plus grand diamètre relativement à une deuxième portion avant de plus petit diamètre 142, le ressort est monté entre un premier appui radial 144 monté fixe dans la première portion 140, par exemple formé par une bague montée serrée et un deuxième appui 146 monté flottant dans la première portion 140 et au repos en appui contre une portée annulaire 148 raccordant la première et la deuxième portions 140,142. L'appui 146 est dans l'exemple représenté formé par une bague , à section transversale avantageusement en forme de chapeau de manière à former un guidage axial pour une extrémité avant du ressort.

Le piston auxiliaire 126 est de forme étagée et comporte une première portion 150 de plus grand diamètre monté à coulissement dans la deuxième portion de plus petit diamètre 142 du perçage 128 et une deuxième portion de plus petit diamètre 152 monté à coulissement dans la première portion 140 de plus grand diamètre et en particulier dans les bagues 144,146. La première 150 et la deuxième portion 152 du piston auxiliaire 126 sont raccordées par un épaulement 154. Le piston auxiliaire est en appui par la deuxième surface 132 contre le palpeur.

L'étanchéité du coulissement est réalisée dans l'exemple représenté par un joint torique porté par le piston auxiliaire sur la première portion de plus grand diamètre.

Un ressort de rappel 133 du piston pneumatique 12 en position repos est monté en compression entre une face avant du piston pneumatique et la coquille avant.

Nous allons maintenant expliquer le fonctionnement du servomoteur selon la présente invention.

En position repos (figure 1 et 2), le clapet 46 est décollé du premier siège de clapet d'équilibrage 48 mettant en communication la chambre avant 8 et la chambre arrière 10 et est en appui sut le deuxième siège de clapet d'admission 50.

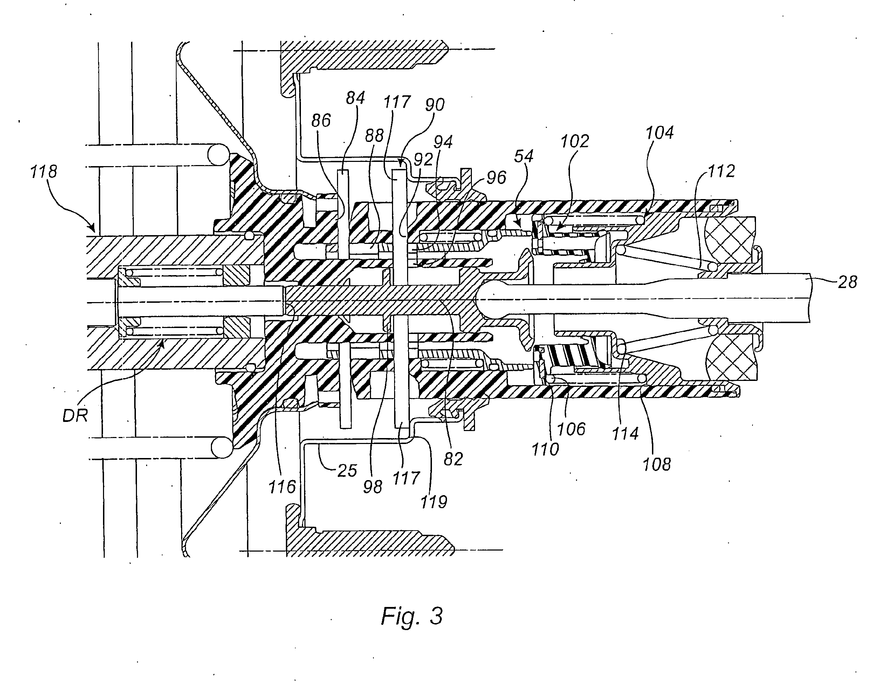

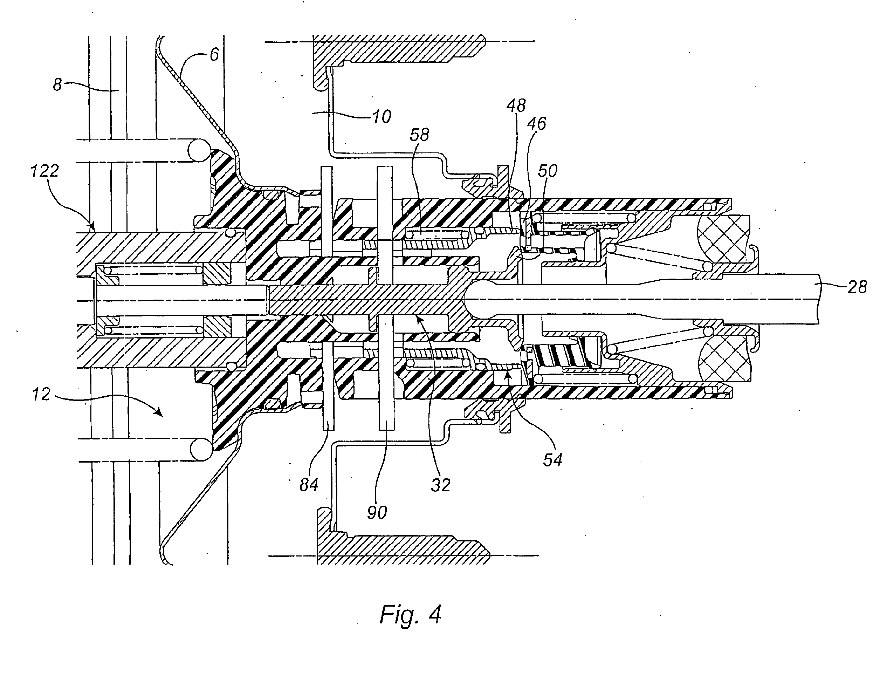

Au début d'une phase de freinage (figures 3 et 4), lorsque le conducteur appuie sur la pédale de frein, la tige d'actionnement 28 est déplacé axialement vers l'avant, le clapet 46 vient alors en application sur le premier siège de clapet 48 isolant la chambre arrière de la chambre avant et se décolle du deuxième siège 50, autorisant l'alimentation en air à pression atmosphérique dans la chambre arrière. Du fait de la différence de pressions entre la chambre avant et la chambre arrière, la jupe 6 et le piston 12 sont emportés vers l'avant. Le premier siège de clapet 48 porté par la douille 54 est immobile tant que le jeu C entre la clé 84 et l'extrémité avant des deuxièmes lumières 88 n'est pas rattrapé. Le ressort 58 maintient la douille dans une position axiale déterminée. Le piston hydraulique du maître-cylindre est emporté par le piston pneumatique, qui emporte lui-même le piston auxiliaire 126 qui s'éloigne du palpeur.

Au delà d'une pression déterminée dans le maître-cylindre suffisante pour que le piston auxiliaire 126 puisse vaincre le ressort de saut, le piston auxiliaire est repoussé en direction du palpeur jusqu'à venir en contact avec celui-ci et retransmet alors la réaction du circuit hydraulique à la pédale de frein.

Lorsque le piston pneumatique 12 a parcouru la course C, la face avant de la clé 84 fixe par rapport au piston pneumatique vient en appui de l'extrémité avant des deuxièmes lumières 88 de la douille, la douille est alors liée axialement au déplacement du piston. Le clapet 46 vient en contact du siège de clapet d'admission 50 et interrompt l'alimentation en air à pression atmosphérique de la chambre arrière. Le conducteur doit alors enfoncer d'avantage la pédale de frein pour augmenter le niveau de freinage.

La course libre C est choisie avantageusement de manière à ce qu'elle corresponde à la course morte du maître-cylindre, c'est-à-dire à la course nécessaire du piston hydraulique dans le maître-cylindre pour obtenir le début de la montée en pression du liquide de frein dans les freins. Mais il est bien entendu que le choix d'une course C supérieure ou inférieure à la course morte du maître-cylindre selon la sensation à la pédale que l'on souhaite obtenir, ne sort pas du cadre de la présente invention.

Par conséquent, le conducteur ne ressent à la pédale que la course nécessaire à la fermeture du clapet d'équilibrage et à l'ouverture du clapet d'admission et ne ressent pas la course morte du maître-cylindre. La confort du conducteur est alors augmenté, puisqu'il a la sensation d'un freinage immédiat.

Ensuite la phase de freinage représentée à la figure 4 correspond à l'équilibre atteint lorsque le conducteur maintient le freinage à un niveau déterminée. Le clapet 46 est alors en contact avec le siège d'équilibrage 48 et le siège d'admission 50, interrompant l'alimentation en air à pression atmosphérique de la chambre arrière.

Dans l'exemple représenté, au repos le clapet 46 est en contact avec le siège d'admission 50 et est à distance du siège d'équilibrage 48. Ainsi au début d'une action de freinage, le clapet 46 vient au contact du siège d'équilibrage 48 pour interrompre là communication entre la chambre avant et la chambre arrière et la chambre avant et s'éloigne du siège d'admission 50 permettant à l'air à pression élevée de pénétrer dans la chambre arrière. Cependant la présente invention s'applique également à un servomoteur d'assistance au freinage comportant une valve trois voies dites ZLT (« zero lost travel » en terminologie anglo-saxonne), dans laquelle le clapet est à la fois au contact du siège d'équilibrage et du siège d'admission. Le siège d'équilibrage est alors au repos formé par une saillie du piston pneumatique et lors d'une action de freinage par la douille 54.

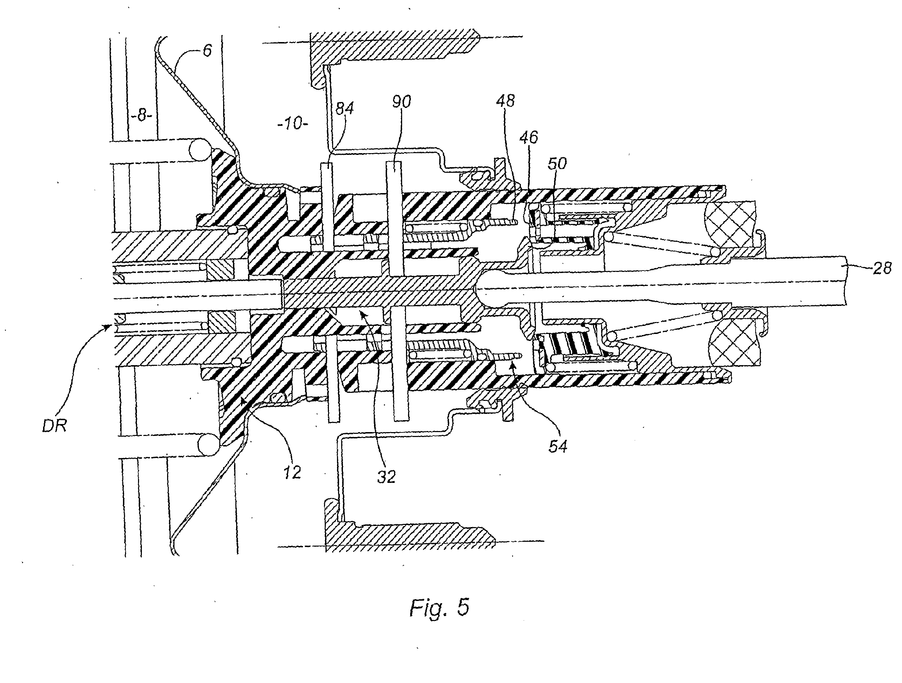

La figure 5 représente le servomoteur en phase de saturation qui correspond au moment
où le servomoteur ne fournit plus d'assistance supplémentaire, la pression régnant dans la chambre arrière est la pression atmosphérique. Le piston pneumatique ne peut plus avancer axialement, par conséquent la douille 54 et le siège de clapet d'équilibrage 48 sont immobiles. Tout effort de freinage supplémentaire fourni par le conducteur déplace la tige de commande 28 et le siège d'admission en éloignement du clapet 46, cependant cet effort supplémentaire n'est plus amplifié. L'augmentation de pression dans le maître-cylindre est égale à l'effort supplémentaire fourni par le conducteur par la section du piston du maître-cylindre.

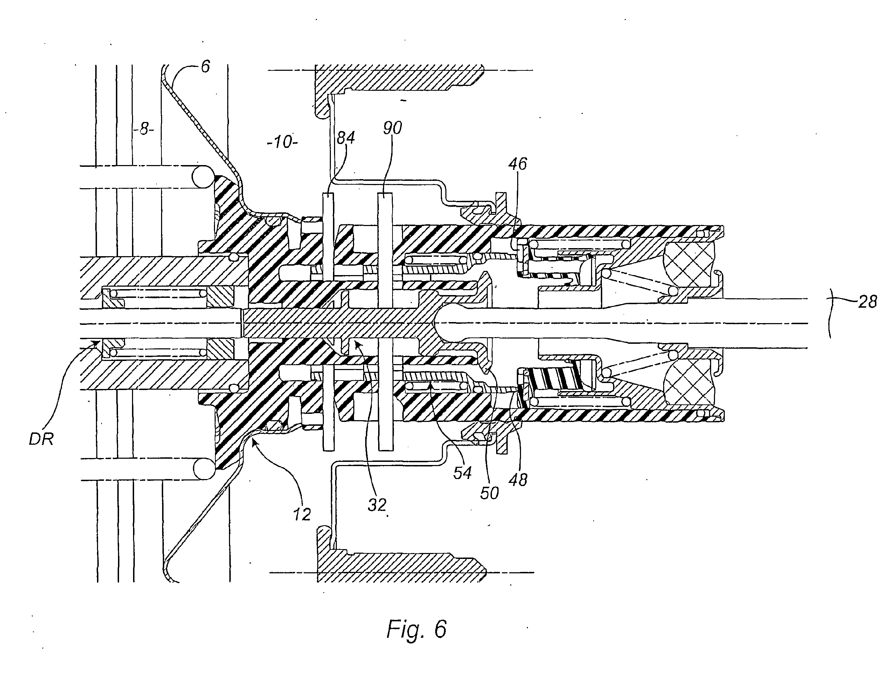

La figure 6 correspond à la fin du freinage, le conducteur relâche la pédale de frein au moins en partie. Le distributeur plongeur est alors entraîné avec la tige de commande vers l'arrière, le siège de clapet d'admission 50 vient en contact du clapet 46 pour interrompre l'alimentation en air à pression atmosphérique de la chambre arrière et emporte le clapet 46 en éloignement du siège d'équilibrage 48, mettant en communication la chambre avant 8 et la chambre arrière 10. Les pressions s'équilibrent alors de part et d'autre de la jupe 6 qui revient en position repos sous l'action du ressort de rappel. La position repos du piston pneumatique 12 est fixé par la deuxième clé 90 en appui contre la portée annulaire 119 de l'enveloppe 2, ainsi que celle du distributeur plongeur qui vient en butée contre la clé 90 par l'intermédiaire de la collerette 98.
La deuxième extrémité 99 des deuxièmes lumières 88 s'éloigne également de la face avant 100 de la première clé 84 par l'action du ressort 58 de rappel de la douille.
Le servomoteur est alors à nouveau en position pour fonctionner avec une course minimale d'actionnement.

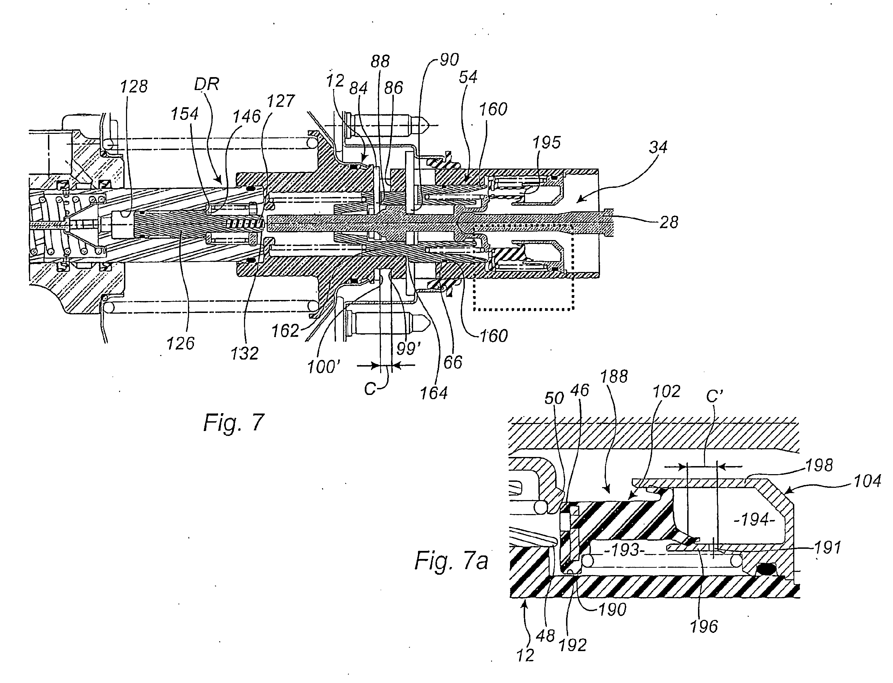

Sur les figures 7, 7 a, 8, 9 ,9a et 10, on peut voir un servomoteur selon un deuxième mode de réalisation. Nous ne nous attacherons à décrire que la partie centrale du servomoteur c'est-à-dire les dispositifs de la valve trois voies et de réaction, les autres éléments étant sensiblement de même structure que ceux décrits aux figures 1 à 7.

Le piston pneumatique 12 est traversé par le perçage axial 34 dans lequel est monté à coulissement étanche la douille 54, en particulier le douille comporte une première portion axiale arrière de plus grand diamètre 160 monté à coulissement dans la deuxième partie 38 du perçage 34 et une deuxième portion avant de plus petit diamètre 162 monté à coulissement dans la troisième partie 40 du perçage 34. La première 160 et la deuxième portion 162 sont raccordées par un épaulement 164.

Le joint torique 66 assurant l'étanchéité du coulissement de la douille dans le perçage 34 est monté dans une gorge de la portion arrière 160 de la douille.

La première clé 84 est montée fixe sur la douille 54 selon le deuxième mode de réalisation, traversante dans le piston pneumatique 12 par les deux premières lumières 86 diamétralement opposées et dans la douille par les deux deuxième lumières diamétralement opposées 88. La course déterminée C est fixée par la distance séparant une première face arrière 100' de la clé et des deuxièmes extrémités arrières 99' des premières lumières 86 du piston 12. Au repos, la clé 84 est en appui contre les première extrémités avant des lumières 86 du piston par une deuxième face avant.

La deuxième clé est identique à la clé précédemment décrite pour le premier mode de réalisation.

Le moyen élastique 58 maintient la douille immobile par rapport au piston 12 tant que le piston 12 n'a pas parcouru la course C, c'est-à-dire que les extrémités arrières 99' des premières lumières ne sont pas venues en contact de la face arrière 100' de la première clé 84. Le moyen élastique est en appui par une première extrémité longitudinale arrière 174 contre un épaulement avant 170 pratiqué sur la paroi externe de la douille et par une deuxième extrémité longitudinale avant 176 contre un rétrécissement annulaire 172 à l'extrémité avant de la troisième partie 40 du perçage 34. Avantageusement, le rétrécissement annulaire 172 s'étend axialement vers l'arrière par une portion cylindrique formant butée transversale de maintien pour l'extrémité avant 176 du moyen élastique 58. Le moyen élastique est avantageusement un ressort cylindrique.

Le ressort de rappel 112 de la tige de commande 28 est monté en appui entre une extrémité arrière de la douille 54 et la tige de commande 28. Dans l'exemple représenté, le ressort est en appui par une première extrémité longitudinale avant 180 contre un fond 182 d'une gorge axiale 178 pratiquée dans la portion de plus grand diamètre 160 de la douille 54 et une première face avant 184 de l'épanouissement tronconique 78 du distributeur-plongeur, le deuxième siège de clapet étant porté par une deuxième face arrière opposée à la première face de l'épanouissement.

Ce mode de réalisation offre plusieurs avantage. D'une part, il procure au conducteur une sensation pédale très proche de celles des dispositifs connus. En effet, lors de la première phase de fonctionnement du servomoteur pendant laquelle le piston 12 parcourt la course C, le l'extrémité avant 180 est immobile par rapport au piston et à la tige de commande 28, puisque la douille 54 est immobile. Par conséquent, la charge du ressort 112 reste constante, et procure une sensation à la pédale très uniforme, il n'y a pas de variation de la sensation lors du déplacement du piston pneumatique lors de la première phase d'actionnement du servomoteur.

D'autre part le fait de déplacer le ressort de rappel 112 libère de l'espace au niveau de l'extrémité arrière de la queue du piston 12, facilitant le débattement transversale de la tige de commande, débattement souhaité par les constructeurs automobiles.

Enfin, l'espace libéré a une géométrie simple qui facilite la mise en place de moyen d'insonorisation formant un barrage efficace aux bruits provenant du compartiment moteur et susceptibles d'apparaître dans l'habitacle. Ces moyens d'insonorisation sont par exemple réalisés en mousse à cellule ouverte laissant passer l'air.

Le fonctionnement du servomoteur selon le deuxième de mode de réalisation est sensiblement 1 e même que celui du premier mode de réalisation. Dans le deuxième mode de réalisation, la clé 84 reste immobile avec la douille.

On peut également voir sur la figure 7, un dispositif de réaction DR selon une deuxième variante de réalisation appliqué à la présente invention, le piston auxiliaire 126 est monté flottant dans le perçage axial 128, le piston auxiliaire est en appui par son épaulement 154 contre la bague 146 et un jeu est prévu entre le palpeur et la deuxième extrémité 132 du piston auxiliaire.

De manière avantageuse, l'extrémité arrière du piston auxiliaire est muni d'un élément amortisseur 127 de bruit par exemple un élément en caoutchouc venant s'appliquer contre le palpeur lors du contact en le palpeur et le piston auxiliaire.

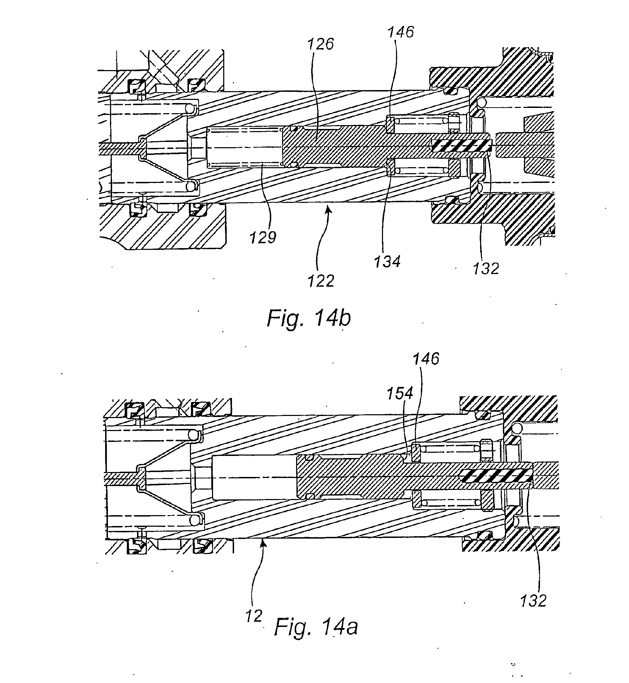

Sur la figure 14a, on peut voir un dispositif de réaction selon une troisième variante de réalisation dans lequel le piston auxiliaire n'est pas en appui au repos contre la bague 146, et le palpeur et l'extrémité 132 sont en contact.

Sur la figure 14b, on peut voir un dispositif de réaction selon une quatrième variante de réalisation comportant un ressort de rappel 129, et dans lequel le piston auxiliaire est en appui au repos par son épaulement 154 contre la bague 146 et un jeu est prévu entre le palpeur et la deuxième extrémité 132 du piston auxiliaire.

De manière avantageuse, le servomoteur selon la présente invention comporte également des moyens pour réduire la vitesse de déplacement de l'ensemble jupe et piston dans la première phase de fonctionnement du servomoteur, afin de réduire la vitesse du contact entre le piston et la douille par l'intermédiaire de la première clé 84. En effet, lorsque le conducteur appuie sur la pédale de frein, fermant la communication entre les chambres avant et arrière et alimentant la chambre arrière en air à pression atmosphérique, la jupe et le piston partent très rapidement. Ce déplacement rapide est susceptible de créer un sensation désagréable pour le conducteur, le piston pneumatique emporte la douille 54 au delà de la course C avec une vitesse trop élevée.

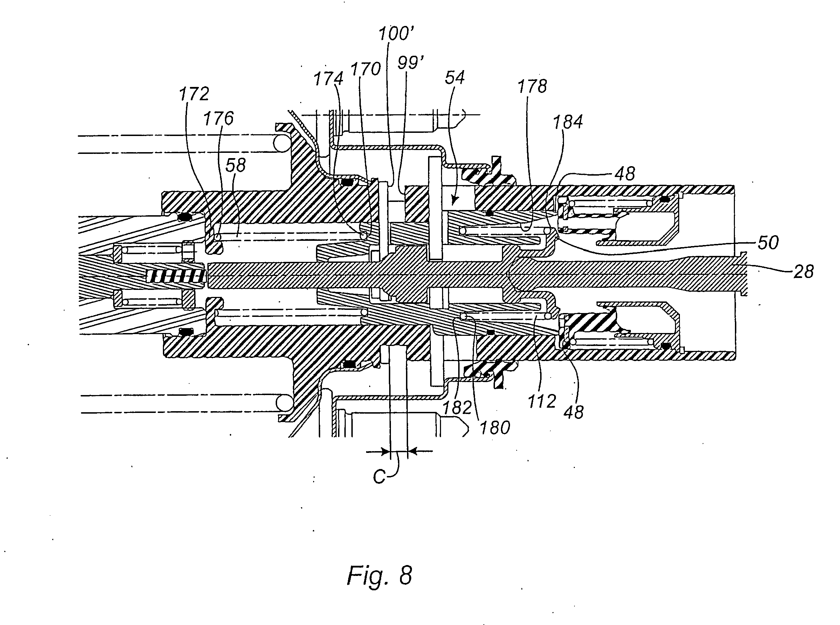

Sur la figure 7a ont peut voir les moyens 188 pour ralentir la vitesse de départ de la jupe et du piston sont formés par un passage de communication entre la chambre avant à basse pression et la chambre arrière à pression variable alors même que le clapet 46 est en application sur la siège de clapet d'équilibrage 48 et interrompt la communication entre la chambre avant et la chambre arrière par les voies habituelles et que le clapet 46 est écarté du siège de clapet d'admission 50. Le passage de communication comporte un premier canal 190 ménagé entre un paroi extérieure 192 du manchon 102 portant le clapet 46 et la première partie arrière 36 du passage 34. Dans l'exemple représenté (figure 8), le canal 190 est de forme annulaire mais on pourrait prévoir également des canaux reparties angulairement formés par des rainures axiales réalisées en creux dans la paroi extérieure du manchon 102 ou dans la paroi de la première partie 36 du passage 34. Le passage de communication 188 comporte également au moins un canal radial; avantageusement plusieurs canaux 191 sensiblement radiaux pratiqués dans une première extension cylindrique axiale 196 extérieure de la cage 104, de manière à mettre en communication au moins en début de phase de freinage une première chambre annulaire 193 extérieure délimitée d'une part par le corps du piston pneumatique 12 et d'autre part par le manchon 102, et une deuxième extension cylindrique 198, et une deuxième chambre annulaire intérieure 194 délimitée par la première extension cylindrique 196, la deuxième 198 extension cylindrique axiale de la cage 104 et une face arrière 200 du manchon 102. La première et deuxième extensions 196,198 se raccordent en une extrémité arrière commune 200.

Le manchon comporte également de manière connue au moins un perçage axial 195 mettant en communication la deuxième chambre annulaire intérieure 194 et la chambre à pression variable à travers la surface annulaire du clapet 46.

Le servomoteur comporte également des moyens d'obturation étanche du passage de communication 188. Dans l'exemple représenté, le manchon 102 comporte à son extrémité arrière une lèvre 189 en contact étanche contre une paroi intérieure 202 de la première extension cylindrique 196 et apte à venir au delà d'une certaine course C' en regard des canaux 191 afin d'interrompre la communication entre la première et la deuxième chambres annulaires 193,194.
Il est bien entendu que l'on peut prévoir d'autres moyens d'étanchéité, par exemple un joint torique porté par une partie rigide arrière du manchon.

Les canaux radiaux 191 sont répartis avantageusement de manière angulaire régulièrement dans la première extension cylindrique 196

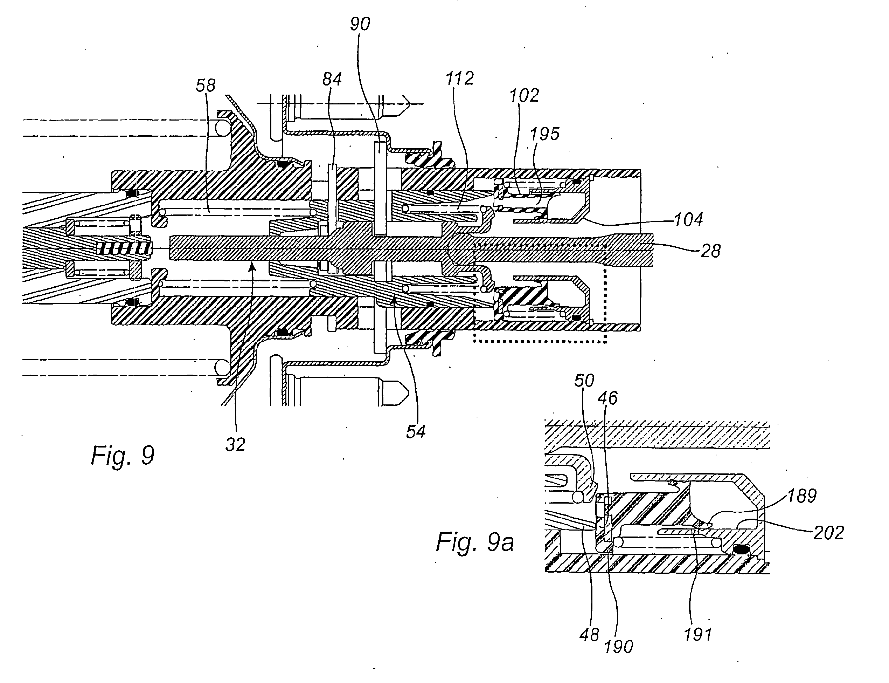

Le passage 188 met en communication au repos et sur la course déterminée C' en début de freinage, la chambre à basse pression avec la chambre à pression variable par le canal 190, les perçages radiaux 191 et le perçage axial 195. Par conséquent en début de phase de freinage, la pression dans la chambre à pression variable est plus faible du fait de la fuite réalisée en direction de la chambre à basse pression. Au delà de la course déterminée C', la lèvre recouvre les perçages radiaux 198 afin de ne pas réduire l'assistance susceptible d'être fournie, par le servomoteur (figure 9a).

De préférence, la deuxième course déterminée C' est au plus égale à la première course déterminée C, pour ralentir la vitesse de déplacement du piston pneumatique 12 par rapport à la douille 54. Cependant le fait de choisir une deuxième course C'supérieure à la première course C ne sort pas du cadre de la présente invention.

Il est de plus en plus fréquent d'adjoindre à un servomoteur d'assistance pneumatique au freinage un dispositif d'assistance au freinage d'urgence permettant le comportement du servomoteur afin de ralentir rapidement le véhicule.

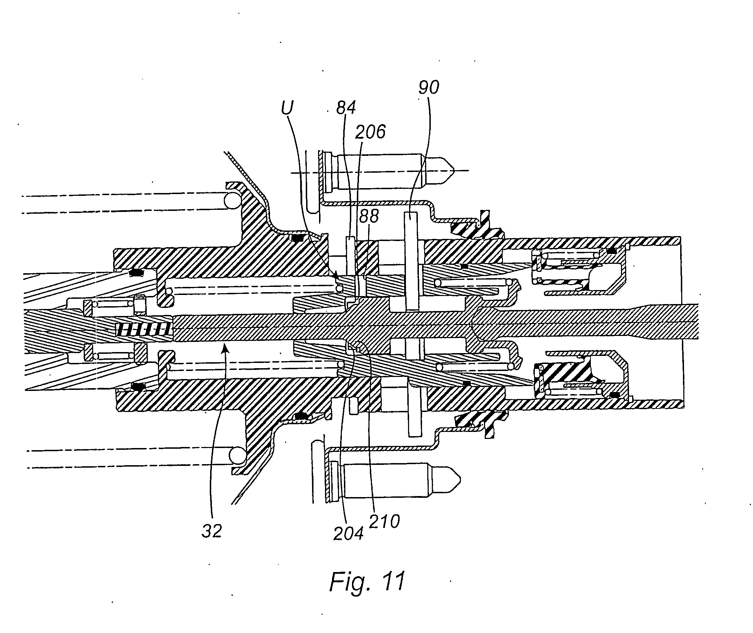

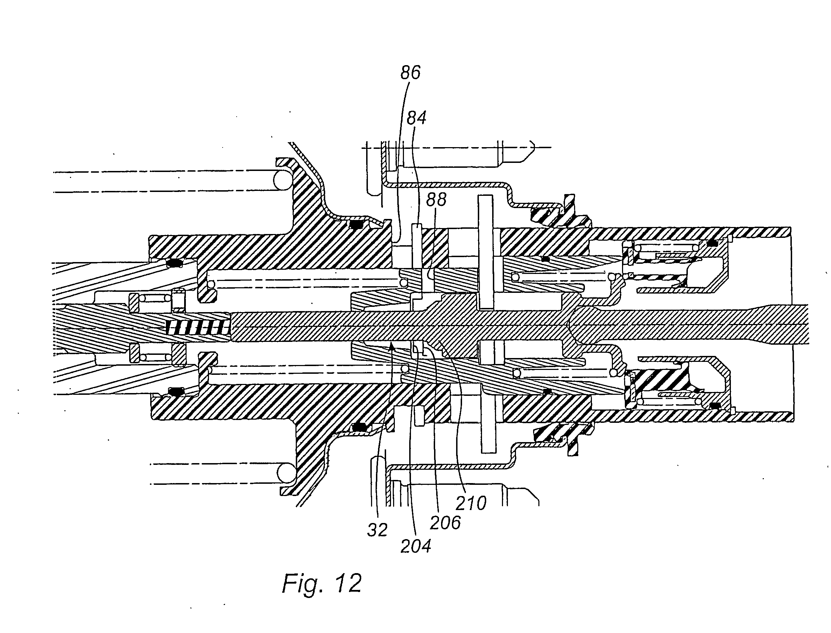

Sur les figures 11,12 , on peut voir un servomoteur selon la présent invention comportant un dispositif d'assistance pneumatique au freinage U se déclenchant lorsque la tige de commande 28 est déplacée avec une vitesse supérieure à une vitesse déterminée Vd.
Le dispositif U comporte un moyen d'indexation axiale de la douille 54 dans une première position avancée P1 et dans une deuxième position reculée P2.
Le moyen d'indexation est formé par la première clé 84 solidaire de la douille et est susceptible de coopérer avec une première et une deuxième faces avant 204,206 des deux deuxièmes lumières 88. Les première et deuxièmes faces avant 204,206 sont axialement décalées et leur coopération avec la face avant de la clé définit respectivement la première et la deuxième position P1, P2.

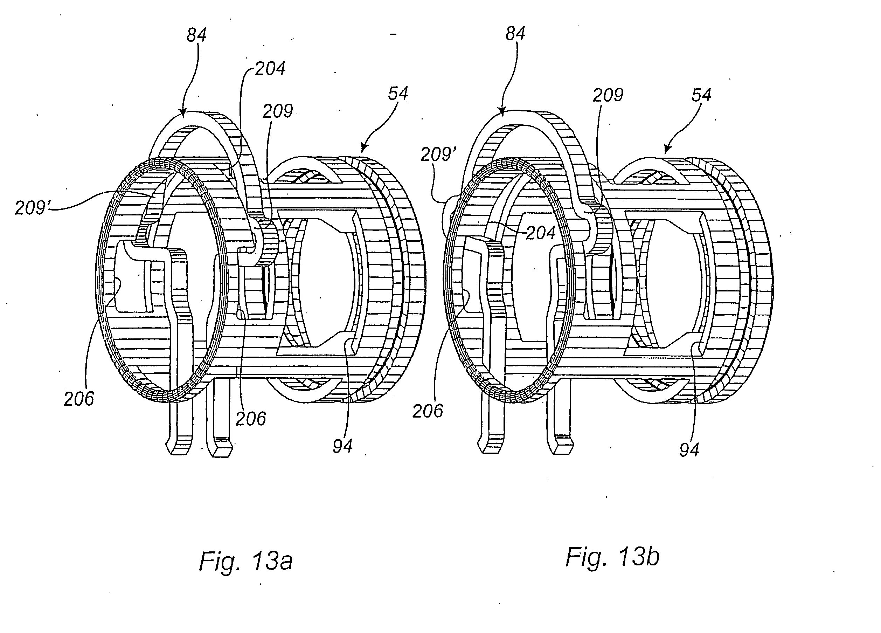

Sur les figures 13a et 13b, on peut voir la clé 84 coopérant avec la douille dans la position P1 et dans la position P2 respectivement. La clé 84 a la forme d'une épingle ressort, par exemple réalisé en fil d'acier à ressort ou en matériau plastique, munie d'une première 209 et deuxième 209' branches sensiblement parallèles et pénétrant dans les lumières 88, et entourant une partie avant 208 du distributeur plongeur.

Le distributeur-plongeur comporte sur sa partie avant une surface tronconique 210 apte à écarter les deux branches 209,209' l'une de l'autre lorsque le distributeur-plongeur se déplace d'une certaine course relativement à la douille 54.

Plus précisément, la surface tronconique va en s'élargissant vers l'arrière et son déplacement vers l'avant écarte les deux branches 209,209' en dehors des lumières 88 de manière à ce que les branches 209,209' échappent aux premières faces 204 contre lesquelles elles étaient en appui. Du fait de l'effort exercé par le ressort 58, la douille est repoussée vers l'arrière de façon étanche jusqu'à venir en appui par les deuxièmes faces avant 206 des lumières 88 contre les branches 209,209 de la clé. De ce fait le siège de clapet 48 est repoussée vers l'arrière (position P2)

La deuxième clé 90 permet à la fin d'une phase de freinage de déplacer la douille 54 vers l'avant de manière à la replacer en position initiale. Les branches de la clé s'éloignent alors de l'élément tronconique, reprenant élastiquement leur position transversale initiale et viennent en butée contre les premières faces avant 204 des lumières 88.

Nous allons maintenant expliquer le fonctionnenemt du servomoteur selon la présent invention muni du dispositif d'assistance au freinage d'urgence décrit ci-dessus

En freinage normal (figure 11), lorsque la tige de commande 28 et par la même le distributeur-plongeur sont déplacés à une vitesse inférieure à la vitesse déterminée Vd, la surface tronconique reste à distance de la clé 84 et la douille ne recule pas en direction du clapet 46, elle conserve la position P1, les branches sont en appui sur les premières faces avant 204 (Figure 13a).
Le clapet 46 vient en contact du premier siège de clapet 48 et s'écarte du deuxième siège de clapet 50, la chambre arrière est alors isolée de la chambre avant et alimentée en air à pression atmosphérique. Le piston pneumatique 12 ainsi que la jupe se déplace vers l'avant, tandis que la douille reste immobile et ceci tant que le piston 12 n'a pas parcouru la course déterminée C
Lorsque le piston 12 a parcouru la course C, la douille 54 est emporté par le piston pneumatique par l'intermédiaire de la clé 84 et le servomoteur fonctionne ensuite comme un servomoteur de type connu.

En freinage d'urgence (Figure 12), lorsque le distrtibuteur-plongeur est déplacé à une vitesse supérieure à la vitesse Vd, la surface tronconique se rapproche de la clé 84 jusqu'à venir s'interposer entre les branches, les forçant à s'écarter l'une de l'autre et à échapper radialement à la première face axiale 204 des deuxièmes lumières 88 de la douille (figure 11). La douille sous l'action du ressort 58 est repoussé en direction du clapet 58, pour prendre la position P2, les branches de la clé 84 étant en appui contre les deuxièmes faces avant 206 (figure 13b). La position du siège d'équilibrage 48 est alors modifiée, ainsi que la position d'équilibre du distributeur-pongeur . En effet, afin d'atteindre l'équilibre (figure 12) c'est-à-dire le contact entre clapet 46 et le premier et le deuxième siège de clapet 48,50, le distributeur-plongeur doit avoir une position reculé, augmentant la distance de saut séparant le palpeur de l'extrémité arrière du piston auxiliaire. Par conséquent le saut est augmenté, accroissant le niveau de freinage.

A la fin du freinage, lorsque l'effort est relâché sur la pédale le distributeur-plongeur est rappelé dans sa position repos par le ressort de rappel 112, les chambres avant et arrière sont de nouveau en communication, le piston 12 recule. La deuxième clé 90 vient alors en appui contre la portée annulaire 119 de la cheminée 25 et force la douille 54 à coulisser en direction du piston hydraulique relativement à la clé 84 qui est en appui contre le piston pneumatique par ses extrémités transversales, les branches quittent le deuxième contact 206, glissent le long de la douille et pénètrent dans la douille de manière élastique pour venir à nouveau en contact de la première face 204.

Le servomoteur est alors de nouveau prêt à fonctionner de manière habituel.

L'intégration du dispositif d'assistance au freinage d'urgence dans le servomoteur selon la présente invention est d'une grand simplicité et ne nécessite aucune modification des éléments constitutifs du servomoteur. Il est de plus très aisé de fournir un servomoteur équipé ou non dudit dispositif en disposant la surface tronconique ou en l'omettant, la même première clé 84 pouvant être utilisée. Les problèmes de gestion de pièces sont par conséquent fortement réduits, les pièces utilisées pour les deux types de servomoteur étant presque toutes identiques.

Il est bien entendu qu'un dispositif de freinage comportant un dispositif d'assistance au freinage d'urgence de type hydraulique, agencé dans le piston primaire du maître-cylindre et réduisant au delà d'une certaine vitesse de déplacement de la commande de freinage et/ou au delà d'un certain effort appliqué à la commande de freinage, une réaction transmise à cette même commande de freinage, ne sort pas du cadre de la présente invention.

On a bien réalisé un servomoteur avec une faible course d'actionnement, de fonctionnement très sûr et de conception simple.

Il est bien entendu que l'on pourrait prévoir un servomoteur selon la présente invention comportant un dispositif de réaction classique du type à disque de réaction.

Le maître-cylindre est avantageusement un maître-cylindre tandem comportant un premier et un deuxième circuits hydrauliques munis respectivement d'un piston primaire et un piston secondaire coulissant de manière étanche dans le corps du maître-cylindre, le piston primaire recevant l'effort appliqué à la pédale et l'effort d'assistance fourni par la jupe.

La présente invention s'applique principalement à l'industrie du freinage pour véhicule automobile.

## Revendications

1. Servomoteur d'assistance pneumatique au freinage comportant une enveloppe (2) d'axe longitudinale (X) formée par une première et une deuxième coquilles, raccordées par leurs extrémités radialement externes, dans laquelle est monté à coulissement étanche un ensemble jupe (6) et piston pneumatique (12) d'axe longitudinal (X), ledit ensemble (6,12) divisant l'espace intérieur (4) de l'enveloppe (2) en une chambre à basse pression (8) et en une chambre à pression variable (10), un ressort d e r appel de l'ensemble jupe et piston pneumatique (8,10) en position repos étant monté dans la chambre à basse pression (8) entre la première coquille et une face du piston pneumatique (12), une valve trois voies (26) actionnée par une tige de commande (28) étant montée dans un passage longitudinal (34) percé dans le piston pneumatique (12), ladite tige de commande (28) étant reliée par une première extrémité longitudinale à une pédale de frein et une deuxième extrémité de ladite tige de commande (28) étant reçue dans une cavité de réception pratiquée dans une première extrémité longitudinale d'un distributeur-plongeur (32), ladite tige de commande étant rappelée dans une positon de repos par un ressort de rappel (112), ledit distributeur plongeur (32) comportant à une deuxième extrémité longitudinale un palpeur d'application de l'effort de la tige de commande (28) à un piston hydraulique (122) d'un maître-cylindre par l'intermédiaire d'un dispositif de réaction (DH), ledit ensemble jupe et piston (6,12) transmettant un effort d'assistance pneumatique au piston hydraulique (122) du maître-cylindre par une face centrale (127) du piston pneumatique, ladite valve trois voies (26) comportant un premier (48) et un deuxième (50) sièges de clapet, et un clapet (46) amené en application d'au moins un des premier et deuxième sièges de clapet (48,50) par un ressort de valve (106), ledit deuxième siège de clapet (50) étant porté par une première extrémité (44) longitudinale du distributeur-plongeur (32) **caractérisé en ce que** le premier siège de clapet est porté par une première extrémité longitudinale d'une douille (54) montée à coulissement étanche dans le piston pneumatique (12) sur une première course déterminée (C), et **en ce qu'**il comporte un moyen de solidarisation apte à lier axialement ladite douille (54) au piston pneumatique (12) lorsque ledit piston pneumatique (12) a parcouru la course déterminée (C).

2. Servomoteur selon la revendication précédente **caractérisé en ce qu'**il comporte un moyen élastique (58) maintenant la douille immobile par rapport à l'enveloppe (2) du servomoteur tant que ladite course déterminée (C) n'est pas rattrapée, ledit moyen élastique étant monté en compression axialement entre une portée annulaire (60,172) pratiquée dans une paroi d'un passage axial du piston pneumatique et un épaulement (64,170) de la douille (54).

3. Servomoteur selon la revendication 1 ou 2 **caractérisé en ce qu'**il comporte une deuxième clé (90) perpendiculaire à l'axe (X) montée fixe dans deux troisièmes lumières (92) du piston pneumatique diamétralement opposées et disposé axialement entre les premières lumières (86) et la pédale de frein et traversant deux quatrièmes lumières (94) diamétralement opposées pratiquées dans la douille (54) afin de former une butée axial en direction de la pédale de frein pour le distributeur plongeur (32) par coopération d'une collerette annulaire solidaire du distributeur-plongeur et d'une première et deuxième branches de la deuxième clé et de définir le position repos du piston pneumatique par coopération des extrémités (117) transversales de ladite deuxième clé (90) avec l'enveloppe du servomoteur.

4. Servomoteur selon la revendication 2, ou 3 en combinaison avec la revendication 2 **caractérisé en ce que** la portée annulaire (172) du piston pneumatique est formé par un rétrécissement axial portée par une face (127) du piston pneumatique transmettant l'effort d'assistance au piston hydraulique du maître-cylindre. et **en ce que** l'épaulement (170) de la douille est situé axialement entre la première clé (84) et le palpeur du distributeur-plongeur.

5. Servomoteur selon la revendication 2 **caractérisé en ce que** ledit moyen de solidarisation est une première clé (84) solidaire en déplacement de ladite douille (54) traversant perpendiculairement à l'axe (X) deux premières lumières (86) diamétralement opposées pratiquées dans la queue dudit piston pneumatique et deux deuxièmes lumières (88) diamètralement opposés pratiquées dans la douille (54) et en ce ladite course déterminée (C) est égale à la distance séparant une extrémité arrière (99') des premières lumières (86) d'une première face arrière (100') de la première clé (84), et ce que ladite première clé (84) est en forme de fourche à deux branches.

6. Servomoteur selon la revendication 4 ou 5 **caractérisé en ce que** le ressort de rappel (112) de la tige de commande( 28) est monté en appui entre un fond (182) d'une gorge axial (178) de la douille (54) et une première face (184) d'un épanouissement tronconique (78) du distributeur-plongeur, ledit épanouissement portant sur une deuxième face opposée à la première face portant le deuxième siège de clapet (50).

7. Servomoteur selon l'une quelconque des revendications 4, 5 ou 6 **caractérisé en ce qu'**il comporte un dispositif d'assistance au freinage d'urgence (U) formé par des moyens aptes à déplacer axialement en direction de frein le premier siège de clapet (48) lorsque le distributeur plongeur est déplacé à une vitesse supérieure à une vitesse déterminé (Vd).

8. Servomoteur selon la revendication précédente en combinaison avec la revendication 5 **caractérisé en ce que** les premier et deuxième bras de la première clé (84) sont élastiques radialement, aptes à être écartés radialement l'un de l'autre, et coopérant avec un décrochement axial (204,206) porté par les deux deuxième lumières (88), ledit décrochement définissant une première (P1) et une deuxième position (P2) axiale de la douille (54), et **en ce que** le distributeur plongeur comporte un moyen pour éloigner radialement les bras de la première clé.

9. Servomoteur selon la revendication précédente en combinaison avec la revendication 3 **caractérisé en ce que** le moyen pour éloigner les bras l'un de l'autre est une surface sensiblement tronconique s'élargissant en direction de la pédale de frein, lié rigidement au ditributeur-plongeur et disposé axialement entre la première (84) et le deuxième clé (90).

10. Servomoteur selon la revendication 1 à 3 ensemble la revendication 2 **caractérisé en ce que** ledit piston pneumatique (12) comporte une gorge axiale annulaire (56) recevant ladite douille (54) et définissant un tronçon tubulaire central (54) recevant le distributeur plongeur et **en ce que** la porté annulaire (60) est pratiquée dans une paroi de la gorge axiale (56).

11. Servomoteur selon la revendication précédente en combinaison avec la revendication 3 **caractérisé en ce que** le tronçon tubulaire central (57) comporte deux cinquièmes lumières (96) diamétralement opposées pour le passage de la deuxième clé (90).

12. Servomoteur selon la revendication précédente **caractérisé en ce qu'**il comporte ledit moyen de solidarisation est une première clé (84) solidaire en déplacement dudit piston pneumatique (12) traversant perpendiculairement à l'axe (X) deux premières lumières (86) diamétralement opposées pratiquées dans la queue dudit piston pneumatique et deux deuxièmes lumières (88) diamétralement opposés pratiquées dans la douille (54), **en ce qu'**une distance égale à la course déterminée (C) sépare une deuxième extrémité longitudinale (99) de la douille (54) et une première face (100) de ladite première clé (84) et **en ce que** ladite clé (84) est en forme de fourche à deux branches chevauchant le tronçon tubulaire central (57) du piston pneumatique.

13. Servomoteur selon l'une quelconque des revendications de 2 à 11 en combinaison avec la revendication 2 **caractérisé en ce que** le moyen élastique (58) est un ressort cylindrique.

14. Servomoteur selon l'une quelconque des revendications précédentes **caractérisé en ce que** l'étanchéité du coulissement entre la douille (54) et le piston pneumatique est réalisé par un joint torique monté dans un gorge pratiquée dans la paroi extérieure de la douille.

15. Servomoteur selon l'une quelconque des revendications précédentes **caractérisé en ce qu'**il comporte des moyens (188) pour réduire la vitesse initiale de déplacement du piston pneumatique relativement à l'enveloppe du servomoteur.

16. Servomoteur selon la revendication précédente **caractérisé en ce que** lesdits moyens (188) pour réduire la vitesse initiale du piston (12) comportent un passage de communication entre la chambre à basse pression et la chambre à haute pression, lorsque le clapet (46) est écarté du deuxième siège de clapet (50) et tant que le piston pneumatique (12) n'a pas parcouru un deuxième course (C') déterminée.

17. Servomoteur selon la revendication précédente **caractérisé en ce que** ledit passage est formé par un canal ménagé entre une paroi extérieur d'un manchon (102) portant à un extrémité axial le clapet (46) et le passage (34) du piston (12), au moins un perçage radial pratiqué dans une première extension cylindrique axiale (196) d'une cage (104) entourant la tige de commande et au moins un perçage axial (195) du manchon (102) mettant en communication la chambre à pression variable avec une chambre annulaire (192) délimitée par le manchon (102), le première extension cylindrique (196) et une deuxième extension cylindrique interne (198) concentrique à la première extension (196) et raccordé de manière étanche la première extension (196) par une extrémité axiale orientée vers la pédale de frein et **en ce que** le manchon comporte à une extrémité opposée au clapet (46) un lèvre apte à venir obturée le perçage radial (191) lorsque le piston s'est déplacé de la course déterminée (C').

18. Servomoteur selon la revendication 16 ou 17 **caractérisée en ce que** la deuxième course déterminée est au plus égale à la première course déterminée (C).

19. Servomoteur selon l'une des revendications précédentes **caractérisé en ce que** le dispositif de réaction (DR) comporte un piston auxiliaire (126) monté à coulissement étanche dans un perçage axial (128) traversant du piston hydraulique (122) du maître-cylindre et soumis par une première extrémité (130) à la pression hydraulique régnant dans le maître-cylindre et en susceptible de venir en contact du palpeur du distributeur plongeur par une deuxième extrémité longitudinale (132) opposée et **en ce qu'**il comporte également un ressort de saut (138) en appui fixe (144) par une première extrémité longitudinale sur le piston hydraulique et par une deuxième extrémité en appui flottant (146) par rapport au piston hydraulique.

20. Servomoteur selon la revendication précédente **caractérisé en ce que** l'appui fixe (144) est une bague montée serrée dans le perçage axial du piston hydraulique et **en ce que** l'appui flottant est une bague montée à coulissement dans le perçage axial (128) et en appui lorsque la pression dans le maître-cylindre est inférieure à la pression déterminée (PH)contre une portée annulaire (148) du perçage (128) raccordant une première et une deuxième portions (140,142).

21. Servomoteur selon la revendication 19 ou 20 **caractérisé en ce que** le piston auxiliaire est en appui par la deuxième extrémité longitudinale (132) contre le palpeur et **en ce qu'**un jeu est prévu entre l'appui flottant et un épaulement (154) du piston auxiliaire.

22. Servomoteur selon la revendication 19 ou 20 **caractérisé en ce que** le piston auxiliaire est en appui contre l'appui flottant par un épaulement (154) et **en ce qu'**un jeu est prévu entre la deuxième extrémité longitudinale (132) et le palpeur.

23. Servomoteur selon la revendication précédente **caractérisé en ce que** le dispositif de réaction (DR) comporte un ressort de rappel (129) monté en appui entre la première extrémité (130) du piston auxiliaire et une extrémité du perçage axial (128), maintenant le piston auxiliaire en contact de l'appui flottant et **en ce qu'**un jeu est prévu entre la deuxième extrémité longitudinale (132) du piston auxiliaire et le palpeur.

24. Servomoteur selon la revendication 19 ou 20 **caractérisé en ce que** le dispositif de réaction (DR) comporte un ressort de rappel (129) monté en appui entre la première extrémité (130) du positon auxiliaire et une extrémité du perçage axial (128), ledit ressort maintenant le piston auxiliaire en appui par la deuxième extrémité longitudinale (132) contre le palpeur et **en ce qu'**un jeu est prévu entre l'appui flottant et un épaulement (154) du piston auxiliaire.

25. Servomoteur selon la revendication 19 à 24 **caractérisé en ce que** l'étanchéité du coulissement entre le piston auxiliaire et le perçage axial d(128) du piston hydraulique est réalisé au moyen d'un joint torique monté dans une gorge pratiquée dans la périphérie du piston auxiliaire.

26. Servomoteur selon la revendication 19 à 25 **caractérisé en ce que** le piston auxiliaire comporte à sa deuxième extrémité un élément amortisseur, avantageusement en élastomère destiné à réduire le bruit de contact entre le palpeur et le piston auxiliaire.

27. Dispositif de freinage comportant un maître-cylindre raccordé de manière hydraulique à des freins disposés au niveau de roues d'un véhicule automobile et un servomoteur interposé entre le maître-cylindre et une tige de commande (28) déplacé au moyen d'une pédale de frein, ledit servomoteur transmettant un effort appliqué à la pédale et appliquant un effort d'assistance pneumatique à un piston hydraulique (122) du maître-cylindre **caractérisé en ce que** ledit servomoteur est un servomoteur selon l'une quelconque des revendications précédentes et **en ce que** ledit piston hydraulique (122) est en appui par une première extrémité longitudinale (124) contre une extrémité du piston pneumatique (12) débouchant dans la chambre à basse pression (8) du servomoteur.

## Claims

1. A pneumatic brake booster comprising a casing (2) of longitudinal axis (X) formed by first and second shells connected by their radially external ends, in which casing an assembly made up of a skirt (6) and a pneumatic piston (12) of longitudinal axis (X) is slideably mounted in a sealed manner, said assembly (6, 12) dividing the inner space (4) of the casing (2) into a low-pressure chamber (8) and into a variable-pressure chamber (10), a return spring which returns the skirt/pneumatic piston assembly (6, 12) into the rest position being mounted in the low-pressure chamber (8) between the first shell and a face of the pneumatic piston (12), a three-way valve arrangement (26) actuated by a control rod (28) being mounted in a longitudinal passage (34) bored in the pneumatic piston (12), said control rod (28) being connected by a first longitudinal end to a brake pedal and a second end of said control rod (28) being received in a reception cavity made in a first longitudinal end of a plunger distributor (32), said control rod being returned into a rest position by a return spring (112), said plunger distributor (32) comprising, at a second longitudinal end, a feeler which applies the force of the control rod (28) to a hydraulic piston (122) of a master cylinder by way of a reaction device (DH), said skirt/piston assembly (6, 12) transmitting a pneumatic boost force to the hydraulic piston (122) of the master cylinder via a central face (127) of the pneumatic piston, said three-way valve arrangement (26) comprising first (48) and second (50) valve seats and a valve (46) applied to at least one of the first and second valve seats (48, 50) by a valve spring (106), said second valve seat (50) being borne by a first longitudinal end (44) of the plunger distributor (32), **characterized in that** the first valve seat is borne by a first longitudinal end of a bushing (54) slideably mounted in a sealed manner in the pneumatic piston (12) over a first defined travel (C), and **in that** it comprises a securing means able to connect said bushing (54) axially to the pneumatic piston (12) when said pneumatic piston (12) has completed the defined travel (C).

2. The booster according to the preceding claim, **characterized in that** it comprises an elastic means (58) maintaining the bushing immobile with respect to the casing (2) of the booster until such time as said defined travel (C) has been achieved, said elastic means being mounted in compression axially between an annular bearing surface (60, 172) made in a wall of an axial passage of the pneumatic piston and a shoulder (64, 170) of the bushing (54).

3. The booster according to claim 1 or 2,
**characterized in that** it comprises a second key (90), perpendicular to the axis (X), mounted fixedly in two third diametrically opposed apertures (92) in the pneumatic piston and arranged axially between the first apertures (86) and the brake pedal and passing through two fourth diametrically opposed apertures (94) made in the bushing (54) so as to form an axial stop in the direction of the brake pedal for the plunger distributor (32) by cooperation between an annular collar secured to the plunger distributor and first and second branches of the second key and so as to define the rest position of the pneumatic piston by cooperation of the transverse ends (117) of said second key (90) with the booster casing.

4. The booster according to claim 2, or 3 in combination with claim 2, **characterized in that** the annular bearing surface (172) of the pneumatic piston is formed by an axial narrowing borne by a face (127) of the pneumatic piston transmitting the boost force to the hydraulic piston of the master cylinder, and **in that** the shoulder (170) of the bushing is situated axially between the first key (84) and the feeler of the plunger distributor.

5. The booster according to claim 2, **characterized in that** said securing means is a first key (84) which is secured in terms of movement to said bushing (54) and passes, perpendicularly to the axis (X), through two first diametrically opposed apertures (86) made in the tail of said pneumatic piston and through two second diametrically opposed apertures (88) made in the bushing (54), and **in that** said defined travel (C) is equal to the distance separating a rear end (99') of the first apertures (86) from a first rear face (100') of the first key (84), and **in that** said first key (84) is in the shape of a fork having two branches.

6. The booster according to claim 4 or 5,
**characterized in that** the return spring (112) for the control rod (28) is mounted so that it bears between a bottom end (182) of an axial groove (178) in the bushing (54) and a first face (184) of a frustoconical widening (78) of the plunger distributor, said widening bearing on a second face opposed to the first face bearing the second valve seat (50).

7. The booster according to any one of claims 4, 5 and 6, **characterized in that** it comprises an emergency brake-boosting device (U) formed by means which are able to move the first valve seat (48) axially in the brake direction when the plunger distributor is moved at a speed above a defined speed (Vd).

8. The booster according to the preceding claim, in combination with claim 5, **characterized in that** the first and second arms of the first key (84) are radially elastic, able to be parted radially from one another and cooperate with an axial step (204, 206) borne by the two second apertures (88), said step defining a first axial position (P1) and a second axial position (P2) for the bushing (54), and **in that** the plunger distributor comprises a means for moving the arms of the first key away radially.

9. The booster according to the preceding claim, in combination with claim 3, **characterized in that** the means for moving the arms away from one another is a substantially frustoconical surface widening in the direction of the brake pedal, connected rigidly to the plunger distributor and arranged axially between the first key (84) and the second key (90).

10. The booster according to claims 1 to 3 together with claim 2, **characterized in that** said pneumatic piston (12) comprises an annular axial groove (56) receiving said bushing (54) and defining a central tubular section (54) receiving the plunger distributor, and **in that** the annular bearing surface (60) is made in a wall of the axial groove (56).

11. The booster according to the preceding claim, in combination with claim 3, **characterized in that** the central tubular section (57) comprises two fifth diametrically opposed apertures (96) for the passage of the second key (90).

12. The booster according to the preceding claim, **characterized in that** said securing means is a first key (84) secured in terms of movement to said pneumatic piston (12) and passing, perpendicularly to the axis (X), through two first diametrically opposed apertures (86) made in the tail of said pneumatic piston and through two second diametrically opposed apertures (88) made in the bushing (54), **in that** a distance equal to the defined travel (C) separates a second longitudinal end (99) of the bushing (54) and a first face (100) of said first key (84), and **in that** said key (84) is in the shape of a fork having two branches straddling the central tubular section (57) of the pneumatic piston.

13. The booster according to any one of claims 2 to 11, in combination with claim 2, **characterized in that** the elastic means (58) is a cylindrical spring.

14. The booster according to any one of the preceding claims, **characterized in that** the sliding movement between the bushing (54) and the pneumatic piston is sealed by an O-ring seal mounted in a groove made in the outer wall of the bushing.

15. The booster according to any one of the preceding claims, **characterized in that** it comprises means (188) for reducing the initial speed of movement of the pneumatic piston relative to the booster casing.

16. The booster according to the preceding claim, **characterized in that** said means (188) for reducing the initial speed of the piston (12) comprise a passage for communication between the low-pressure chamber and the high-pressure chamber when the valve (46) is moved apart from the second valve seat (50) until such time as the pneumatic piston (12) has completed a second defined travel (C').

17. The booster according to the preceding claim, **characterized in that** said passage is formed by a duct formed between an outer wall of a sleeve (102) bearing at an axial end the valve (46) and the passage (34) of the piston (12), at least one radial bore made in a first axial cylindrical extension (196) of a cage (104) surrounding the control rod and at least one axial bore (195) in the sleeve (102) placing the variable-pressure chamber in communication with an annular chamber (192) delimited by the sleeve (102), the first cylindrical extension (196) and a second inner cylindrical extension (198), which is concentric to the first extension (196) and connected in a sealed manner to the first extension (196) by an axial end oriented toward the brake pedal, and **in that** the sleeve comprises at an opposite end to the valve (46) a lip which is able to come into a blocking position over the radial bore (191) when the piston has moved by the defined travel (C').

18. The booster according to claim 16 or 17,
**characterized in that** the second defined travel is at most equal to the first defined travel (C).

19. The booster according to one of the preceding claims, **characterized in that** the reaction device (DR) comprises an auxiliary piston (126) which is slideably mounted in a sealed manner in an axial through bore (128) of the hydraulic piston (122) of the master cylinder and is subjected via a first end (130) to the hydraulic pressure prevailing in the master cylinder and is thereby capable of coming into contact with the feeler of the plunger distributor via a second opposed longitudinal end (132), and **in that** it also comprises a jump spring (138) supported fixedly (144) via a first longitudinal end on the hydraulic piston and via a second end supported in a floating manner (146) with respect to the hydraulic piston.

20. The booster according to the preceding claim, **characterized in that** the fixed support (144) is a ring force-fitted into the axial bore of the hydraulic piston, and **in that** the floating support is a ring mounted slideably in the axial bore (128) and supported, when the pressure in the master cylinder is below the defined pressure (PH), against an annular bearing surface (148) of the bore (128) connecting first and second portions (140, 142).

21. The booster according to claim 19 or 20,
**characterized in that** the auxiliary piston is supported via the second longitudinal end (132) against the feeler, and **in that** a clearance is provided between the floating support and a shoulder (154) of the auxiliary piston.

22. The booster according to claim 19 or 20,
**characterized in that** the auxiliary piston is supported against the floating support by a shoulder (154), and **in that** a clearance is provided between the second longitudinal end (132) and the feeler.

23. The booster according to the preceding claim, **characterized in that** the reaction device (DR) comprises a return spring (129) mounted so that it bears between the first end (130) of the auxiliary piston and an end of the axial bore (128), keeping the auxiliary piston in contact with the floating support, and **in that** a clearance is provided between the second longitudinal end (132) of the auxiliary piston and the feeler.

24. The booster according to claim 19 or 20,
**characterized in that** the reaction device (DR) comprises a return spring (129) mounted so that it bears between the first end (130) of the auxiliary piston and an end of the axial bore (128), said spring keeping the auxiliary piston bearing against the feeler via the second longitudinal end (132), and **in that** a clearance is provided between the floating support and a shoulder (154) of the auxiliary piston.

25. The booster according to claims 19 to 24,
**characterized in that** the sliding movement between the auxiliary piston and the axial bore (128) of the hydraulic piston is sealed by means of an O-ring seal mounted in a groove made in the periphery of the auxiliary piston.

26. The booster according to claims 19 to 25,
**characterized in that** the auxiliary piston comprises at its second end a shock-absorbing element, advantageously made of elastomer, intended to reduce the contact noise between the feeler and the auxiliary piston.

27. A braking device comprising a master cylinder connected hydraulically to brakes arranged at the wheels of a motor vehicle and a booster interposed between the master cylinder and a control rod (28) moved by means of a brake pedal, said booster transmitting a force applied to the pedal and applying a pneumatic boost force to a hydraulic piston (122) of the master cylinder, **characterized in that** said booster is a booster according to any one of the preceding claims, and **in that** said hydraulic piston (122) bears via a first longitudinal end (124) against an end of the pneumatic piston (12) emerging into the low-pressure chamber (8) of the booster.

## Patentansprüche

1. Pneumatischer Servomotor zur Bremsunterstützung, mit einem Gehäuse (2) mit der Längsachse (X), das durch eine erste und eine zweite Schale gebildet ist, welche über ihre radial äußeren Enden miteinander verbunden sind, und in dem eine Baugruppe bestehend aus einer Schürze (6) und einem pneumatischen Kolben (12) mit der Längsachse (X) in dichter Weise gleitend angebracht ist, wobei die Baugruppe (6, 12) den Innenraum (4) des Gehäuses (2) in eine Niederdruckkammer (8) und in eine Kammer (10) mit variablem Druck unterteilt, in der Niederdruckkammer (8) zwischen der ersten Schale und einer Fläche des pneumatischen Kolbens (12) eine Feder zum Zurückstellen der Baugruppe (8, 10) bestehend aus der Schürze und dem pneumatischen Kolben in die Ruhestellung angebracht ist, ein von einer Steuerstange (28) betätigtes Dreiwegeventil (26) in einem Längsdurchgang (34) angebracht ist, der durch den pneumatischen Kolben (12) hindurch verläuft, die Steuerstange (28) über ein erstes Längsende mit einem Bremspedal verbunden ist, ein zweites Ende der Steuerstange (28) in einer in einem ersten Längsende eines Tauchkolbenverteilers (32) ausgebildeten Aufnahmevertiefung aufgenommen ist, die Steuerstange durch eine Rückstellefeder (112) in eine Ruhestellung zurückgestellt wird, der Tauchkolbenverteiler (32) an einem zweiten Längsende einen Taster zum Aufbringen der Kraft der Steuerstange (28) auf einen hydraulischen Kolben (122) eines Hauptzylinders mittels einer Reaktionsvorrichtung (DR) aufweist, die Baugruppe (6, 12) bestehend aus Schürze und Kolben über eine mittlere Fläche (127) des pneumatischen Kolbens eine pneumatische Unterstützungskraft zum hydraulischen Kolben (122) des Hauptzylinders überträgt, das Dreiwegeventil (26) einen ersten Ventilelementsitz (48) und einen zweiten Ventilelementsitz (50) sowie ein Ventilelement (46) aufweist, das durch eine Ventilfeder (106) in Anlage an den ersten Ventilelementsitz und/oder an den zweiten Ventilelementsitz (48, 50) gebracht wird, und wobei der zweite Ventilelementsitz (50) von einem ersten Längsende (44) des Tauschkolbenverteilers (32) getragen ist, **dadurch gekennzeichnet, dass** der erste Ventilelementsitz von einem ersten Längsende einer Hülse (54) getragen ist, die im pneumatischen Kolben (12) so angebracht ist, dass sie über einen ersten vorbestimmten Weg (C) in dichter Weise gleitet, und dass er ein Verbindungsmittel aufweist, mit dem die Hülse (54) axial mit dem pneumatischen Kolben (12) verbunden werden kann, wenn der pneumatische Kolben (12) den vorbestimmten Weg (C) zurückgelegt hat.

2. Servomotor nach dem vorhergehenden Anspruch, **dadurch gekennzeichnet, dass** er ein elastisches Mittel (58) aufweist, das die Hülse so hält, dass sie sich in Bezug auf das Gehäuse (2) des Servomotors nicht bewegt, solange keine Rückstellung über den vorbestimmten Weg (C) erfolgt ist, wobei das elastische Mittel axial zusammengedrückt zwischen einer ringförmigen Auflagefläche (60, 172), die in einer Wand eines axialen Durchgangs des pneumatischen Kolbens ausgebildet ist, und einer Schulter (64, 170) der Hülse (54) angebracht ist.

3. Servomotor nach Anspruch 1 oder 2, **dadurch gekennzeichnet, dass** er einen zweiten, zur Achse (X) senkrechten Schlüssel (90) aufweist, der fest in zwei dritten Öffnungen (92) des pneumatischen Kolbens angebracht ist, welche diametral entgegengesetzt und axial zwischen den ersten Öffnungen (86) und dem Bremspedal ausgebildet sind, und der zwei vierte Öffnungen (94) durchquert, die diametral entgegengesetzt und in der Hülse (54) ausgebildet sind, so dass durch Zusammenwirkung eines ringförmigen, fest mit dem Tauchkolbenverteiler verbundenen Kragens mit einem ersten und einem zweiten Arm des zweiten Schlüssels ein axialer Anschlag in Richtung Bremspedal für den Tauchkolbenverteiler (32) gebildet und durch Zusammenwirkung der querverlaufenden Enden (117) des zweiten Schlüssels (90) mit dem Gehäuse des Servomotors die Ruhestellung des pneumatischen Kolbens definiert ist.

4. Servomotor nach Anspruch 2 oder nach Anspruch 3 in Kombination mit Anspruch 2, **dadurch gekennzeichnet, dass** die ringförmige Auflagefläche (172) des pneumatischen Kolbens durch eine axiale Verengung gebildet ist, die von einer Fläche (127) des pneumatischen Kolbens getragen ist, welche die Unterstützungskraft zum hydraulischen Kolben des Hauptzylinders überträgt, und dass die Schulter (170) der Hülse axial zwischen dem ersten Schlüssel (84) und dem Taster des Tauchkolbenverteilers angeordnet ist.

5. Servomotor nach Anspruch 2, **dadurch gekennzeichnet, dass** das Verbindungsmittel ein erster Schlüssel (84) ist, der hinsichtlich einer Verlagerung mit der Hülse (54) fest verbunden ist und senkrecht zur Achse (X) zwei erste Öffnungen (86), die diametral entgegengesetzt und im Endstück des pneumatischen Kolbens ausgebildet sind, und zwei zweite Öffnungen (88) durchquert, die diametral entgegengesetzt und in der Hülse (54) ausgebildet sind, dass der vorbestimmte Weg (C) dem Abstand zwischen einem hinteren Ende (99') der ersten Öffnungen (86) und einer ersten hinteren Fläche (100') des ersten Schlüssels (84) entspricht und dass der erste Schlüssel (84) die Form einer Gabel mit zwei Armen besitzt.

6. Servomotor nach Anspruch 4 oder 5, **dadurch gekennzeichnet, dass** die Feder (112) zum Zurückstellen der Steuerstange (28) in Anlage zwischen einem Boden (182) einer axialen Nut (178) der Hülse (54) und einer ersten Fläche (184) einer kegelstumpfartigen Aufweitung (78) des Tauchkolbenverteilers angebracht ist, wobei die Aufweitung an einer zweiten, zur ersten Fläche entgegengesetzten Fläche den zweiten Ventilelementsitz (50) trägt.

7. Servomotor nach einem der Ansprüche 4, 5 oder 6, **dadurch gekennzeichnet, dass** er eine Vorrichtung (U) zur Unterstützung einer Schnellbremsung aufweist, die durch Mittel gebildet ist, welche den ersten Ventilelementsitz (48) axial zur Bremse hin verlagern können, wenn der Tauchkolbenverteiler mit einer Geschwindigkeit verlagert wird, die höher ist als eine vorbestimmte Geschwindigkeit (Vd).

8. Servomotor nach dem vorhergehenden Anspruch in Kombination mit Anspruch 5, **dadurch gekennzeichnet, dass** der erste und der zweite Arm des ersten Schlüssels (84) radial elastisch sind, radial voneinander weggerückt werden können und mit einem von den beiden zweiten Öffnungen (88) getragenen axialen Absatz (204, 206) zusammenwirken, der eine erste axiale Stellung (P1) und eine zweite axiale Stellung (P2) der Hülse (54) definiert, und dass der Tauchkolbenverteiler ein Mittel aufweist, mit dem die Arme des ersten Schlüssels radial auseinandergedrückt werden können.

9. Servomotor nach dem vorhergehenden Anspruch in Kombination mit Anspruch 3, **dadurch gekennzeichnet, dass** das Mittel, mit dem die Arme auseinandergedrückt werden können, eine im Wesentlichen kegelstumpfartige Oberfläche ist, die sich zum Bremspedal hin erweitert, wobei das Mittel starr mit dem Tauchkolbenverteiler verbunden und axial zwischen dem ersten Schlüssel (84) und dem zweiten Schlüssel (90) angeordnet ist.

10. Servomotor nach Anspruch 1 und 3 in Kombination mit Anspruch 2, **dadurch gekennzeichnet, dass** der pneumatische Kolben (12) eine axiale, ringförmige Nut (56) aufweist, die die Hülse (54) aufnimmt und einen röhrenförmigen Mittelabschnitt (57) begrenzt, der den Tauchkolbenverteiler aufnimmt, und dass die ringförmige Auflagefläche (60) in einer Wand der axialen Nut (56) ausgebildet ist.

11. Servomotor nach dem vorhergehenden Anspruch in Kombination mit Anspruch 3, **dadurch gekennzeichnet, dass** der röhrenförmige Mittelabschnitt (57) für das Durchführen des zweiten Schlüssels (90) zwei fünfte, diametral entgegengesetzte Öffnungen (96) aufweist.

12. Servomotor nach dem vorhergehenden Anspruch, **dadurch gekennzeichnet, dass** das Verbindungsmittel, das er aufweist, ein erster Schlüssel (84) ist, der hinsichtlich einer Verlagerung fest mit dem pneumatischen Kolben (12) verbunden ist, senkrecht zur Achse (X) zwei erste Öffnungen (86), die diametral entgegengesetzt und im Endstück des pneumatischen Kolbens ausgebildet sind, und zwei zweite Öffnungen (88) durchquert, die diametral entgegengesetzt und in der Hülse (54) ausgebildet sind, dass ein dem vorbestimmten Weg (C) entsprechender Abstand ein zweites querverlaufendes Ende (99) der Hülse (54) von einer ersten Fläche (100) des ersten Schlüssels (84) trennt und dass der Schlüssel (84) die Form einer Gabel mit zwei Armen besitzt, die sich auf der einen und der anderen Seite des röhrenförmigen Mittelabschnitts (57) des pneumatischen Kolbens erstrecken.

13. Servomotor nach einem der Ansprüche 2 bis 11 in Kombination mit Anspruch 2, **dadurch gekennzeichnet, dass** das elastische Mittel (58) eine zylindrische Feder ist.

14. Servomotor nach einem der vorhergehenden Ansprüche, **dadurch gekennzeichnet, dass** die Dichtigkeit des Gleitens zwischen der Hülse (54) und dem pneumatischen Kolben durch eine torische Dichtung realisiert ist, die in einer in der Außenwand der Hülse ausgebildeten Nut angeordnet ist.

15. Servomotor nach einem der vorhergehenden Ansprüche, **dadurch gekennzeichnet, dass** er Mittel (188) zur Verringerung der ursprünglichen Verlagerungsgeschwindigkeit des pneumatischen Kolbens bezüglich des Gehäuses des Servomotors aufweist.

16. Servomotor nach dem vorhergehenden Anspruch, **dadurch gekennzeichnet, dass** die Mittel (188) zur Verringerung der ursprünglichen Geschwindigkeit des Kolbens (12) einen Verbindungsdurchgang zwischen der Niederdruckkammer und der Hochdruckkammer aufweisen, wenn das Ventilelement (46) von dem zweiten Ventilelementsitz (50) weggerückt ist und solange der pneumatische Kolben (12) einen zweiten vorbestimmten Weg (C') nicht zurückgelegt hat.

17. Servomotor nach dem vorhergehenden Anspruch, **dadurch gekennzeichnet, dass** der Durchgang durch einen Kanal gebildet ist, der zwischen einer Außenwand einer Muffe (102), die an einem axialen Ende das Ventilelement (46) trägt, und dem Durchgang (34) des Kolbens (12) ausgebildet ist, durch mindestens eine radiale Bohrung, die in einer ersten zylindrischen, axialen Verlängerung (196) eines Halters (104) ausgebildet ist, der die Steuerstange umgibt, durch mindestens eine axiale Bohrung (195) der Muffe (102), die die Kammer mit variablem Druck mit einer ringförmigen, von der Muffe (102) begrenzten Kammer (192) verbindet, und durch die erste zylindrische Verlängerung (196) und eine zweite zylindrische, innere Verlängerung (198), die zur ersten Verlängerung (196) konzentrisch verläuft und in dichter Weise durch ein axiales, zum Bremspedal orientieres Ende mit der ersten Verlängerung (196) verbunden ist, und dass die Muffe an einem zum Ventilelement (46) entgegengesetzten Ende eine Lippe aufweist, die die radiale Bohrung (191) verschließen kann, wenn sich der Kolben um den vorbestimmten Weg (C') verlagert hat.

18. Servomotor nach Anspruch 16 oder 17, **dadurch gekennzeichnet, dass** der zweite vorbestimmte Weg höchstens gleich dem ersten vorbestimmten Weg (C) ist.

19. Servomotor nach einem der vorhergehenden Ansprüche, **dadurch gekennzeichnet, dass** die Reaktionsvorrichtung (DR) einen Hilfskolben (126) aufweist, der in dichter Weise gleitend in einer axialen, durchgehenden Bohrung (128) des hydraulischen Kolbens (122) des Hauptzylinders angeordnet ist, über ein erstes Ende (130) dem hydraulischen, im Hauptzylinder herrschenden Druck ausgesetzt ist und über ein zweites, entgegengesetztes Längsende (132) mit dem Taster des Tauchkolbenverteilers in Berührung gelangen kann, und dass sie auch eine Sprungfeder (138) mit einer festen Anlage (144) bezüglich des hydraulischen Kolbens an einem ersten Längsende und mit einer schwimmenden Anlage (146) bezüglich des hydraulischen Kolbens an einem zweiten Ende aufweist.

20. Servomotor nach dem vorhergehenden Anspruch, **dadurch gekennzeichnet, dass** die feste Anlage (144) ein Ring ist, der festgeklemmt in der axialen Bohrung des hydraulischen Kolbens angebracht ist, und dass die schwimmende Anlage ein Ring ist, der gleitend in der axialen Bohrung (128) angebracht ist und an einer ringförmigen Auflagefläche (148) der einen ersten und einen zweiten Abschnitt (140, 142) verbindenden Bohrung (128) anliegt, wenn der Druck im Hauptzylinder geringer ist als der vorbestimmte Druck (PH).

21. Servomotor nach Anspruch 19 oder 20, **dadurch gekennzeichnet, dass** der Hilfskolben über das zweite Längsende (132) am Taster anliegt und zwischen der schwimmenden Anlage und einer Schulter (154) des Hilfskolbens ein Spiel vorgesehen ist.

22. Servomotor nach Anspruch 19 oder 20, **dadurch gekennzeichnet, dass** der Hilfskolben über eine Schulter (154) an der schwimmenden Anlage anliegt und zwischen dem zweiten Längsende (132) und dem Taster ein Spiel vorgesehen ist.

23. Servomotor nach dem vorhergehenden Anspruch, **dadurch gekennzeichnet, dass** die Reaktionsvorrichtung (DR) eine Rückstellfeder (129) aufweist, die in Anlage zwischen dem ersten Ende (130) des Hilfskolbens und einem Ende der axialen Bohrung (128) angebracht ist und den Hilfskolben so hält, dass er die schwimmende Anlage berührt, und dass zwischen dem zweiten Längsende (132) des Hilfskolbens und dem Taster ein Spiel vorgesehen ist.

24. Servomotor nach Anspruch 19 oder 20, **dadurch gekennzeichnet, dass** die Reaktionsvorrichtung (DR) eine Rückstellfeder (129) aufweist, die in Anlage zwischen dem ersten Ende (130) des Hilfskolbens und einem Ende der axialen Bohrung (128) angebracht ist, wobei die Feder den Hilfskolben so hält, dass er über das zweite Längsende (132) am Taster anliegt, und dass zwischen der schwimmenden Anlage und einer Schulter (154) des Hilfskolbens ein Spiel vorgesehen ist.

25. Servomotor nach den Ansprüchen 19 bis 24, **dadurch gekennzeichnet, dass** die Dichtigkeit des Gleitens zwischen dem Hilfskolben und der axialen Bohrung (128) des hydraulischen Kolbens durch eine torische Dichtung realisiert ist, die in einer im Umfang des Hilfskolbens ausgebildeten Nut angeordnet ist.

26. Servomotor nach den Ansprüchen 19 bis 25, **dadurch gekennzeichnet, dass** der Hilfskolben an seinem zweiten Ende ein Dämpfungsmittel aufweist, das vorzugsweise aus Elastomer besteht und die bei der Berührung zwischen dem Taster und dem Hilfskolben erzeugten Geräusche verringern soll.

27. Bremsvorrichtung mit einem Hauptzylinder, der hydraulisch mit Bremsen verbunden ist, die auf Höhe der Räder eines Kraftfahrzeugs angeordnet sind, und mit einem Servomotor, der zwischen dem Hauptzylinder und einer mittels eines Bremspedals verlagerten Steuerstange (28) angeordnet ist, wobei der Servomotor eine auf das Pedal aufgebrachte Kraft überträgt und eine pneumatische Unterstützungskraft auf einen hydraulischen Kolben (122) des Hauptzylinders aufbringt, **dadurch gekennzeichnet, dass** der Servomotor ein Servomotor nach einem der vorhergehenden Ansprüche ist und dass der hydraulische Kolben (122) über ein erstes Längsende (124) an einem Ende des pneumatischen Kolbens (12) anliegt, das in die Niederdruckkammer (8) des Servomotors mündet.
